# FASCICULE DE BREVET EUROPEEN

(11) **EP 4 558 956 B1**
(45) Date de publication et mention de la délivrance du brevet: **09.12.2026**
(21) Numéro de dépôt: 23736767.7
(22) Date de dépôt: 06.07.2023
(51) Int. Cl.: G06T 5/60, G06T 5/73, G06T 3/4046, G06T 3/4053

(54) **DISPOSITIF ET PROCEDE DE FORMATION D'UNE IMAGE A FAIBLE NIVEAU DE BRUIT A PARTIR D'UNE RAFALE D'IMAGES**
VORRICHTUNG UND VERFAHREN ZUR ERZEUGUNG EINES RAUSCHARMEN BILDES AUS EINEM BILDBURST
DEVICE AND METHOD FOR FORMING A LOW-NOISE IMAGE FROM A BURST OF IMAGES

(30) Priorité: 22.07.2022 FR 2207574
(43) Date de publication de la demande: 28.05.2025
(73) Titulaire: Institut National de Recherche en Informatique et en Automatique, 78150 Rocquencourt (FR)
(72) Inventeur: LECOUAT, Bruno, 78150 LE CHESNAY (FR); PONCE, Jean, 78150 LE CHESNAY (FR); MAIRAL, Julien, 78150 LE CHESNAY (FR)
(74) Mandataire: Vidon Brevets & Stratégie
(86) Numéro de dépôt international: PCT/EP2023/068782
(87) Numéro de publication internationale: WO 2024/017666

(56) Documents cités:
- BRUNO LECOUAT ET AL: "Lucas-Kanade Reloaded: End-to-End Super-Resolution from Raw Image Bursts", ARXIV.ORG, CORNELL UNIVERSITY LIBRARY, 201 OLIN LIBRARY CORNELL UNIVERSITY ITHACA, NY 14853, 23 August 2021 (2021-08-23), XP091025562
- ZHANG K ET AL: "Deep unfolding network for image-super-resolution", PROCEEDINGS OF THE CONFÉRENCE ON COMPUTER VISION AND PATTERN RÉCOGNITION (CVPR,, 1 January 2020 (2020-01-01), pages 3217 - 3226, XP002808868
- BHAT GOUTAM ET AL: "NTIRE 2021 Challenge on Burst Super-Resolution: Methods and Results", 2021 IEEE/CVF CONFERENCE ON COMPUTER VISION AND PATTERN RECOGNITION WORKSHOPS (CVPRW), IEEE, 19 June 2021 (2021-06-19), pages 613 - 626, XP033967817, DOI: 10.1109/CVPRW53098.2021.00073
- AKSHAY DUDHANE ET AL: "Burst Image Restoration and Enhancement", ARXIV.ORG, CORNELL UNIVERSITY LIBRARY, 201 OLIN LIBRARY CORNELL UNIVERSITY ITHACA, NY 14853, 7 October 2021 (2021-10-07), XP091073528

## Description

Le domaine de l'invention se rapporte au traitement d'une rafale d'images pour la formation d'une image présentant un niveau de bruit inférieur à celui des images de la rafale d'images et une résolution spatiale supérieure.

Les photographies prises avec un appareil photographique de milieu de gamme ou un téléphone intelligent (aussi désigné par le terme anglophone « *smartphone* ») présentent généralement un niveau de bruit élevé et une faible résolution spatiale. Ces caractéristiques ont des répercussions sur le niveau de détail de la photographie : un niveau de bruit faible permet de distinguer les détails dans les zones sombres tandis qu'une résolution spatiale élevée permet de zoomer sur la photographie. Par ailleurs, la qualité de la photographie peut être altérée par des artefacts colorés causés par des couleurs vives.

Une solution possible, pour un capteur photographique de taille donnée, est de diminuer la taille des pixels pour augmenter la résolution spatiale. La contrepartie est cependant une augmentation du bruit dans les zones sombres causée par le fait que chaque pixel reçoit une plus faible quantité de photons. Ce phénomène est particulièrement problématique avec les téléphones intelligents dont le capteur photographique est généralement de taille réduite.

Il est également connu d'utiliser plusieurs photographies d'une même scène - on parle alors d'une rafale d'images (aussi connue sous le terme anglophone « *burst* ») - pour construire une photographie d'une qualité supérieure, c'est-à-dire un niveau de bruit plus faible et une meilleure résolution spatiale. Les images de la rafale d'images peuvent être exploitées sous la forme de fichiers RAW - aussi appelés images brutes -, c'est-à-dire des fichiers d'images numériques contenant les données brutes pour la formation d'une image visible.

Ce principe est notamment décrit dans l'article de B. Wronski et al. (2019) : « Handheld multi-frame super-resolution » (ACM Transactions On Graphics, vol. 38, No. 4, art. 28, p. 1-18) pour augmenter la résolution spatiale.

Plus récemment, les inventeurs de la présente invention, B. Lecouat, J. Ponce et J. Mairal, ont proposé, dans une publication (2021) : « Lucas-Kanade reloaded: end-to-end super resolution from raw image burst » (International Conference on Computer Vision (ICCV)), une solution qui permet d'aligner les images brutes avec une précision sous-pixellique, de rester aussi fidèle que possible aux données acquises par le capteur photographique et de concevoir une fonction de régularisation (aussi connue sous le terme anglophone « *regularizer* ») performante.

Cette solution présente néanmoins plusieurs inconvénients. En particulier, elle ne tient pas compte de l'hétérogénéité des images brutes, c'est-à-dire leurs durées d'exposition respectives, et ne prévoit pas non plus de déparasitage (aussi désigné par le terme anglophone « *deghosting* »). Par ailleurs, l'optimisation proposée pour minimiser une fonction d'énergie et résoudre un problème inverse exige des ressources de calcul importantes et présente un coût de temps élevé.

La présente invention vient améliorer la situation.

À ce titre, l'invention concerne un dispositif de formation d'une image d'une première résolution spatiale à partir d'une pluralité de couples formés chacun d'une image d'une deuxième résolution spatiale inférieure ou égale à la première résolution spatiale et d'une durée d'exposition. Le dispositif comprend :
- un module d'initialisation agencé pour recevoir les images de deuxième résolution spatiale et comprenant :
   - un estimateur agencé pour estimer, pour chaque image de deuxième résolution spatiale, un paramètre de distorsion en appliquant un algorithme Lucas-Kanade,
   - une unité de traitement agencée pour appliquer, au moins à une image de deuxième résolution spatiale de référence parmi les images de deuxième résolution spatiale, un dématriçage et, lorsque la deuxième résolution spatiale est inférieure à la première résolution spatiale, une mise à l'échelle pour obtenir une image de première résolution spatiale initiale, et
- un module d'optimisation agencé pour recevoir les images de deuxième résolution spatiale, les paramètres de distorsion associés et l'image de première résolution spatiale initiale et pour minimiser une fonction d'énergie quadratique paramétrée par une variable d'estimation de l'image de première résolution spatiale et une variable auxiliaire, la variable d'estimation de l'image de première résolution spatiale et la variable auxiliaire étant initialisées sur la base de l'image de première résolution spatiale initiale. La minimisation est réalisée par itérations successives comprenant chacune la mise à jour de la variable auxiliaire par une descente de gradient en fonction des images de deuxième résolution spatiale et des paramètres de distorsion associés et la mise à jour de la variable d'estimation de l'image de première résolution spatiale en fonction de la variable auxiliaire mise à jour.

Le dispositif est caractérisé en ce que le module d'initialisation est agencé pour recevoir en outre les durées d'exposition respectives des images de deuxième résolution spatiale et comprend en outre :
- une unité d'alignement agencée pour aligner par interpolation l'image de deuxième résolution spatiale de référence en fonction de chaque paramètre de distorsion,
- un réseau de neurones convolutif agencé pour recevoir, en entrée, chaque image de deuxième résolution spatiale et l'image de deuxième résolution spatiale de référence alignée en fonction du paramètre de distorsion associé et pour générer, en sortie, un facteur de confiance,
- un calculateur agencé pour calculer, pour chaque image de deuxième résolution spatiale, un poids de déparasitage en fonction de la durée d'exposition correspondante et du facteur de confiance associé,
   et en ce que le module d'optimisation est agencé pour recevoir en outre les poids de déparasitage respectivement associés aux images de deuxième résolution spatiale et comprend :
   - une unité de mise à jour agencée pour mettre à jour la variable auxiliaire par descente de gradient en fonction en outre des poids de déparasitage.

Dans un ou plusieurs modes de réalisation, le module d'initialisation comprend en outre :
- un réseau de neurones convolutif agencé pour recevoir, en entrée, les images de deuxième résolution spatiale et pour générer, en sortie, une carte de caractéristiques pour chaque image de deuxième résolution spatiale,
et en ce que l'estimateur est agencé pour appliquer l'algorithme Lucas-Kanade à chaque carte de caractéristiques pour estimer le paramètre de distorsion associé à chaque image de deuxième résolution spatiale.

Avantageusement, l'estimateur est agencé pour traiter chaque carte de caractéristiques, pour l'application de l'algorithme Lucas-Kanade, sous la forme d'une pyramide gaussienne.

Dans un ou plusieurs modes de réalisation, le module d'optimisation comprend en outre :
- un réseau de neurones convolutif agencé pour recevoir, en entrée, la variable auxiliaire mise à jour et pour générer, en sortie, la variable d'estimation de l'image de première résolution spatiale mise à jour.

Avantageusement, le réseau de neurones convolutif du module d'optimisation est agencé pour mettre en œuvre un partage de poids d'une itération à l'autre.

Par exemple, le calculateur est agencé pour calculer chaque poids de déparasitage comme suit : ${w}_{k} = \frac{Δ {t}_{k} {m}_{c} \left({y}_{k}\right)}{{\sum }_{j = 1}^{K} Δ {t}_{j} {m}_{c} \left({y}_{j}\right)} ⋅ {g}_{ρ} \left({y}_{k},{W}_{k}{y}_{k 0}\right)$ où : - yₖ est la k-ème image de deuxième résolution spatiale,
- wₖ est le poids de déparasitage calculé pour l'image de deuxième résolution spatiale yₖ,
- Δtₖ est la durée d'exposition de l'image de deuxième résolution spatiale yₖ,
- K est le nombre d'images de deuxième résolution spatiale,
- m_{c}(·) est un masque binaire remplaçant par zéro toute valeur de pixel inférieure ou égale à un seuil c,
- g_{ρ} est le facteur de confiance paramétré par un paramètre ρ du réseau de neurones convolutif,
- Wₖ est un opérateur de distorsion caractérisé par le paramètre de distorsion associé à l'image de deuxième résolution spatiale yₖ, et
- yₖ₀ est l'image de deuxième résolution spatiale de référence.

Avantageusement, l'unité d'alignement est agencée pour aligner l'image de deuxième résolution spatiale de référence en fonction de chaque paramètre de distorsion par interpolation bilinéaire.

Dans un ou plusieurs modes de réalisation, l'unité de traitement est agencé pour dématricer chaque image de deuxième résolution spatiale, aligner par interpolation chaque image de deuxième résolution spatiale dématricée en fonction du paramètre de distorsion associé, former une image de deuxième résolution spatiale par moyennage des images de deuxième résolution spatiale dématricées et alignées et, lorsque la deuxième résolution spatiale est inférieure à la première résolution spatiale, mettre à l'échelle l'image de deuxième résolution spatiale formée pour obtenir l'image de première résolution spatiale initiale.

Par exemple, l'unité de mise à jour est agencée pour mettre à jour la variable auxiliaire par descente de gradient comme suit : $z ← z - δ \left(η\left(z-x\right)+{\sum }_{k = 1}^{K} {A}_{k}^{T} \left({w}_{k}^{2}⋅\left({A}_{k}z-{y}_{k}\right)\right)\right)$ avec : ${A}_{k} = Δ {t}_{k} {CD}_{s} {BW}_{k}$ où : - z est la variable auxiliaire,
- x est la variable d'estimation de l'image de première résolution spatiale,
- yₖ est la k-ème image de deuxième résolution spatiale,
- K est le nombre d'images de deuxième résolution spatiale,
- wₖ est le poids de déparasitage associé à l'image de deuxième résolution spatiale yₖ,
- Δtₖ est la durée d'exposition de l'image de deuxième résolution spatiale yₖ,
- Wₖ est un opérateur de distorsion caractérisé par le paramètre de distorsion associé à l'image de deuxième résolution spatiale yₖ,
- C est un masque binaire modélisant une matrice de filtres colorés,
- s est le facteur de mise à l'échelle utilisé pour obtenir l'image de première résolution spatiale initiale,
- Dₛ est un opérateur de décimation caractérisé par le facteur s de mise à l'échelle,
- B est un opérateur de floutage,
- δ est un paramètre de la descente de gradient, et
- η est un paramètre de la fonction d'énergie quadratique à deux variables.

Typiquement, le module d'optimisation est agencé pour implémenter trois itérations successives.

Dans un ou plusieurs modes de réalisation, au moins un réseau de neurones convolutif présente une architecture de type U-net.

L'invention concerne également un procédé de formation d'une image d'une première résolution spatiale à partir d'une pluralité de couples formés chacun d'une image d'une deuxième résolution spatiale inférieure ou égale à la première résolution spatiale et d'une durée d'exposition. Le procédé est mise en œuvre par le dispositif décrit précédemment et comprend :
- une phase d'initialisation comprenant les opérations suivantes :
   recevoir les images de deuxième résolution spatiale,
   estimer, pour chaque image de deuxième résolution spatiale, un paramètre de distorsion en appliquant un algorithme Lucas-Kanade,
   appliquer, au moins à une image de deuxième résolution spatiale de référence parmi les images de deuxième résolution spatiale, un dématriçage et, lorsque la deuxième résolution spatiale est inférieure à la première résolution spatiale, une mise à l'échelle pour obtenir une image de première résolution spatiale initiale, et
- une phase d'optimisation comprenant les opérations suivantes :
   recevoir les images de deuxième résolution spatiale, les paramètres de distorsion associés et l'image de première résolution spatiale initiale,
      minimiser une fonction d'énergie quadratique paramétrée par une variable d'estimation de l'image de première résolution spatiale et une variable auxiliaire, la variable d'estimation de l'image de première résolution spatiale et la variable auxiliaire étant initialisées sur la base de l'image de première résolution spatiale initiale. La minimisation est réalisée par itérations successives comprenant chacune la mise à jour de la variable auxiliaire par une descente de gradient en fonction des images de deuxième résolution spatiale et des paramètres de distorsion associés et la mise à jour de la variable d'estimation de l'image de première résolution spatiale en fonction de la variable auxiliaire mise à jour.

Le procédé est caractérisé en ce que la phase d'initialisation comprend les opérations suivantes :
recevoir en outre les durées d'exposition respectives des images de deuxième résolution spatiale,
aligner par interpolation l'image de deuxième résolution spatiale de référence en fonction de chaque paramètre de distorsion,
utiliser un réseau de neurones convolutif recevant, en entrée, chaque image de deuxième résolution spatiale et l'image de deuxième résolution spatiale de référence alignée en fonction du paramètre de distorsion associé et générant, en sortie, un facteur de confiance,
calculer, pour chaque image de deuxième résolution spatiale, un poids de déparasitage en fonction de la durée d'exposition correspondante et du facteur de confiance associé,
et en ce que la phase d'optimisation comprend les opérations suivantes : recevoir en outre les poids de déparasitage respectivement associés aux images de deuxième résolution spatiale,
mettre à jour la variable auxiliaire par descente de gradient en fonction en outre des poids de déparasitage.

Dans un ou plusieurs modes de réalisation, le procédé comprend en outre une phase d'entraînement préalable du dispositif avec un ensemble de données d'apprentissage comprenant une image de première résolution spatiale et une pluralité de couples formés chacun d'une image de deuxième résolution spatiale et d'une durée d'exposition, chaque image de deuxième résolution spatiale étant générée à partir de l'image de première résolution spatiale comme suit : ${{y}_{k}}^{\left(1\right)} = {{A}_{k}}^{\left(1\right)} {x}^{\left(1\right)} + {{ε}_{k}}^{\left(1\right)}$ avec : ${{A}_{k}}^{\left(1\right)} = Δ {{t}_{k}}^{\left(1\right)} {C}^{\left(1\right)} {{D}_{s}}^{\left(1\right)} {B}^{\left(1\right)} {{W}_{k}}^{\left(1\right)}$ où : - x⁽¹⁾ est l'image de première résolution spatiale de l'ensemble de données d'apprentissage,
- yₖ⁽¹⁾ est la k-ème image de deuxième résolution spatiale de l'ensemble de données d'apprentissage,
- Δtₖ⁽¹⁾ est la durée d'exposition de l'image de deuxième résolution spatiale yₖ⁽¹⁾,
- Wₖ⁽¹⁾ est un opérateur de distorsion associé à l'image de deuxième résolution spatiale yₖ⁽¹⁾,
- C⁽¹⁾ est un masque binaire modélisant une matrice de filtres colorés,
- Dₛ⁽¹⁾ est un opérateur de décimation caractérisé par un facteur s de mise à l'échelle,
- B⁽¹⁾ est un opérateur de floutage,
- εₖ⁽¹⁾ est un bruit associé à l'image de deuxième résolution spatiale yₖ⁽¹⁾.

Avantageusement, la phase d'entraînement préalable est supervisée en utilisant plusieurs ensembles de données d'apprentissage comprenant chacun une image de première résolution spatiale et une pluralité de couples formés chacun d'une image de deuxième résolution spatiale et d'une durée d'exposition. La phase d'entraînement préalable supervisée permet de paramétrer le dispositif de manière à minimiser la quantité suivante : ${\sum }_{i = 1}^{n} {\left‖{x}^{\left(i\right)}-{\hat{x}}^{\left(i\right)}\right‖}_{1}$ où : - *x*^{(*i*)} est l'image de première résolution spatiale du i-ème ensemble de données d'apprentissage,
- *x̂*^{(*i*)} est l'image de première résolution spatiale estimée par le dispositif à partir du i-ème ensemble de données d'apprentissage, et
- n est le nombre d'ensembles de données d'apprentissage.

Enfin, l'invention concerne aussi un programme informatique comprenant des instructions dont l'exécution par au moins un processeur se traduit par la mise en œuvre du procédé décrit précédemment.

D'autres caractéristiques, détails et avantages apparaîtront à la lecture de la description détaillée ci-après, et à l'analyse des dessins annexés sur lesquels :
[Fig. 1] illustre un dispositif de formation d'une image d'une première résolution spatiale à partir d'une rafale d'images d'une deuxième résolution spatiale selon l'invention ;
[Fig. 2] illustre un procédé de formation d'une image d'une première résolution spatiale à partir d'une rafale d'images d'une deuxième résolution spatiale selon l'invention ;
[Fig. 3] illustre une phase d'initialisation du procédé de la [Fig. 2];
[Fig. 4] illustre une phase d'optimisation du procédé de la [Fig. 2] ; et
[Fig. 5] illustre une phase d'entraînement du procédé de la [Fig. 2]

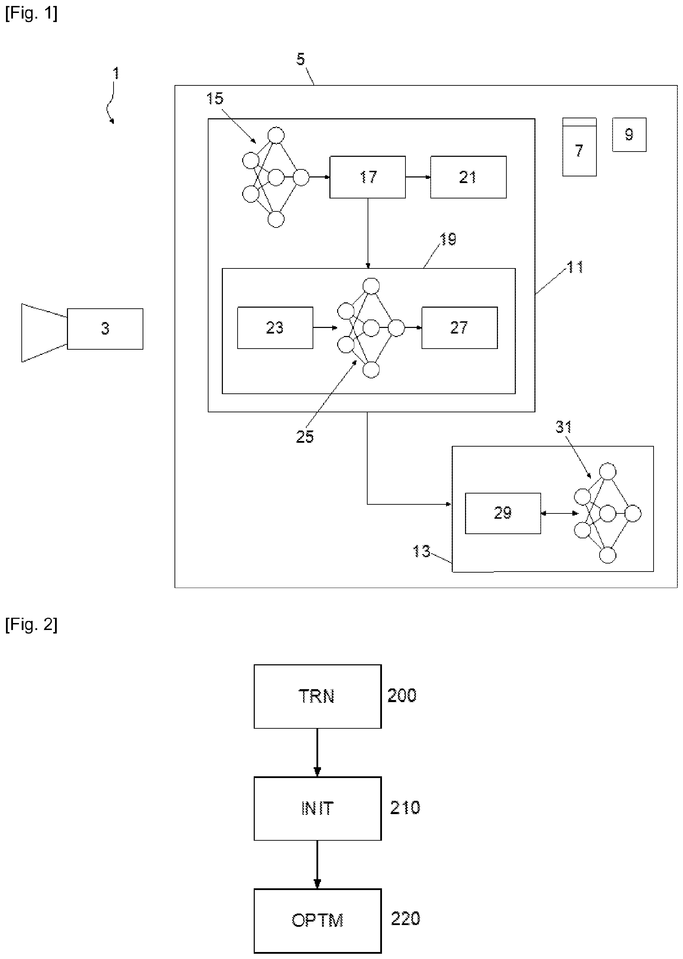

La [Fig. 1] illustre un système 1 comprenant un capteur photographique 3 et un système 5.

Le capteur photographique 3 est agencé pour recevoir un rayonnement électromagnétique - et plus particulièrement la lumière visible - en provenance d'une scène et pour convertir ce rayonnement en un signal électrique. Ce signal électrique est destiné à être numérisé, par exemple avec un convertisseur analogique-numérique, puis amplifié et traité pour obtenir une image numérique.

Le capteur photographique 3 constitue une surface photosensible formée par une matrice d'éléments actifs appelés photosites. Chaque photosite peut être assimilé à un capteur élémentaire - de type photodiode - agencé pour convertir la lumière reçue en un courant électrique. Chaque photosite fonctionne selon le principe de l'effet photoélectrique : les photons incidents arrachent des électrons des photosites.

Par ailleurs, la matrice de photosites du capteur photographique 3 est couplée avec une matrice de filtres colorés (parfois désigné par l'acronyme anglophone CFA pour « *color filter array* »), c'est-à-dire une mosaïque de filtres de couleur disposée de sorte que chaque photosite est associé à un filtre de couleur. En effet, les photosites sont sensibles à l'intensité lumineuse et non à la couleur ; la matrice de filtres colorés permet ainsi de séparer les couleurs. Parmi les différentes matrices de filtres colorés connues, la matrice de Bayer est la plus utilisée. La matrice de Bayer est constituée à 50% de filtres verts, à 25% de filtres rouges et à 25% de filtres bleus.

L'image analogique directement obtenue par le capteur photographique 3 prend la forme d'une carte d'éclairement lumineux (aussi connue sous les termes anglophones « *irradiance map* » ou « *irradiance image* »). Chaque pixel de cette carte - ou image - d'éclairement lumineux correspond à un photosite. Ainsi, la carte d'éclairement lumineux se présente sous la forme d'une matrice dont chaque pixel a une valeur réelle positive caractéristique de l'éclairement lumineux mesuré au niveau du photosite correspondant.

Pour générer une image numérique, le capteur photographique 3 est agencé pour appliquer, pixel par pixel, une transformation S à la carte d'éclairement lumineux. La fonction S est une fonction qui, à une valeur réelle positive, associe un entier appartenant à un ensemble P_{q}, c'est-à-dire l'ensemble des entiers compris entre 0 et 2^{q}-1. On dit alors que le capteur photographique 3 a une profondeur de q bits.

En outre, il convient de prendre en compte la durée d'exposition de la carte d'éclairement lumineux considérée. La durée d'exposition - également appelée temps de pose ou vitesse d'obturation - est la durée pendant laquelle le capteur photographique 3 est exposée à la lumière.

Chaque pixel de l'image numérique obtenu est calculé comme suit : $y \left(u\right) = S \left(Δtx\left(u\right)\right)$ où : - u est un pixel donné,
- y(u) est la valeur du pixel u de l'image numérique,
- x(u) est la valeur du pixel u de la carte d'éclairement lumineux, et
- Δt est la durée d'exposition.

La sortie du capteur photographique 3 est donc une image matricée en noir et blanc dont chaque pixel a une valeur entière caractérisant la quantité de photons collectée par le photosite correspondant.

Typiquement, l'image numérique obtenue par le capteur photographique 3 prend la forme d'un fichier RAW.

Le dispositif 5 est agencé pour former une image d'une première résolution spatiale à partir d'une pluralité de couples formés chacun d'une image d'une deuxième résolution spatiale et d'une durée d'exposition. Il doit être compris ici que, au sein d'un couple donné, la durée d'exposition correspond au temps de pose de l'image de deuxième résolution spatiale associée.

Plus généralement, le dispositif 5 est agencé pour former, à partir d'une rafale d'images, une image dont la qualité - en particulier le niveau de détail - est supérieure à celle des images de la rafale d'images.

Par « niveau de détail », on comprend ici que l'image formée par le dispositif 5 a un niveau de bruit inférieur, et optionnellement une résolution spatiale supérieure ou égale à celle des images de la rafale d'images ou une gamme dynamique plus élevée. En photographie, la gamme dynamique désigne le rapport entre l'intensité lumineuse la plus élevée et l'intensité lumineuse la plus faible qu'un capteur photographique peut capturer.

La première résolution spatiale est par conséquent supérieure ou égale à la deuxième résolution spatiale. Il doit être noté en particulier que le dispositif 5 peut être utilisé simplement pour baisser le niveau de bruit sans augmenter la résolution spatiale, par exemple pour une rafale d'images d'une scène sombre ou nocturne, auquel cas la première résolution spatiale de l'image formée par le dispositif 5 est égale à la deuxième résolution spatiale des images de la rafale d'images.

Par souci de simplification, l'image de première résolution spatiale est appelée « image haute résolution », tandis que les images de deuxième résolution spatiale sont appelées « images basse résolution » dans la suite de la description.

Par ailleurs, concernant les formats respectifs de l'image haute résolution et de l'image basse résolution, le dispositif 5 peut être configuré de sorte que les images basse résolution reçues sont des fichiers RAW - ou images brutes - alors que l'image haute résolution formée est une carte - ou image - d'éclairement lumineux.

Il convient également de noter que les images basse résolution et leurs durées d'exposition respectives peuvent être reçues par le dispositif 5 en provenance du capteur photographique 3, auquel cas le système 1 forme un système de capture d'une rafale d'images basse résolution et de formation, à partir de cette rafale d'images basse résolution, d'une image haute résolution.

Le dispositif 5 peut également être agencé pour recevoir les images basse résolution en provenance d'une pluralité de capteurs photographiques tels que le capteur photographique 3 ou encore recevoir les images basse résolution depuis une mémoire ou une plateforme de stockage quelconque. On comprend ainsi que le dispositif 5 peut être totalement dissocié du capteur photographique 3.

Le dispositif 5 est donc agencé pour recevoir un ensemble Y d'images basse résolution yₖ et un ensemble Δ de durées d'exposition Δtₖ, et pour former une image haute résolution *x̂*. Ici, k est un entier naturel compris entre 1 et K, où K est le nombre de couples formés d'une image basse résolution yₖ et d'une durée d'exposition Δtₖ associée.

Parmi les images basse résolution yₖ, on distingue par ailleurs une image basse résolution de référence yₖ₀ par rapport à laquelle l'alignement de chacune des autres images basse résolution yₖ est destiné à être évalué. En général, l'image basse résolution de référence yₖ₀ est l'image basse résolution centrale de la rafale d'images yₖ. Toutefois, l'image basse résolution de référence yₖ₀ peut également être la première image basse résolution reçue par le dispositif 5.

Les images basse résolution yₖ d'une même scène sont prises en rafale et peuvent donc être chronologiquement ordonnées, en utilisant par exemple un marqueur temporel attaché à chaque image basse résolution yₖ. On comprend ici que les expressions « image basse résolution centrale » et « première image basse résolution » sont relatives à l'ordre chronologique des images basse résolution yₖ.

Comme illustré sur la [Fig. 1], le dispositif 5 comprend une mémoire 7, un processeur 9, un module d'initialisation 11 et un module d'optimisation 13.

La mémoire 7 est agencée pour stocker des instructions dont la mise en œuvre, par le processeur 9, se traduit par le fonctionnement du dispositif 5. En particulier, de telles instructions permettent de mettre en œuvre la formation d'une image haute résolution *x̂* à partir d'une pluralité de couples formés chacun d'une image basse résolution yₖ et d'une durée d'exposition associée Δtₖ.

La mémoire 7 peut également être agencée pour stocker les images basse résolution reçues par le dispositif 5 et leurs durées d'exposition respectives.

La mémoire 7 peut désigner tout support de stockage de données agencé pour recevoir et conserver des données numériques, par exemple un disque dur, un disque à semi-conducteurs (aussi désigné par l'acronyme anglophone SSD pour *« solid-state drive* ») ou plus généralement tout matériel informatique permettant le stockage de données sur de la mémoire flash. La mémoire 7 peut également être une mémoire vive ou encore un disque magnéto-optique. Une combinaison de plusieurs types de stockages de données peut aussi être envisagée.

Le processeur 9 peut être réalisé de toute manière connue, par exemple sous la forme d'un microprocesseur, d'un circuit logique programmable (aussi désigné par l'acronyme anglophone PLD pour « *Programmable Logical Device* ») ou d'une puce dédiée de type FPGA (acronyme anglophone pour « *Field Programmable Gate Array* ») ou SoC (acronyme anglophone pour « *System on Chip* »), d'une grille de ressources informatiques, d'un microcontrôleur ou de toute autre forme propre disposant de la puissance de calcul nécessaire à la mise en œuvre du procédé de formation d'une image haute résolution *x̂* décrit ci-après. Un ou plusieurs de ces éléments peuvent également être réalisés sous la forme de circuits électroniques spécialisés tel un ASIC (acronyme anglophone pour « *Application-Specific Integrated Circuit* »). Une combinaison de processeurs et de circuits électroniques peut aussi être envisagée.

Un procédé de formation d'une image haute résolution *x̂* à partir d'une pluralité de couples formés chacun d'une image basse résolution yₖ et d'une durée d'exposition Δtₖ va à présent être décrit en référence à la [Fig. 2].

Comme illustré sur la [Fig. 2], ce procédé, mis en œuvre par le dispositif 5, comprend une phase d'entraînement 200, une phase d'initialisation 210 et une phase d'optimisation 220.

La phase d'entraînement 200 sera abordée en fin de description.

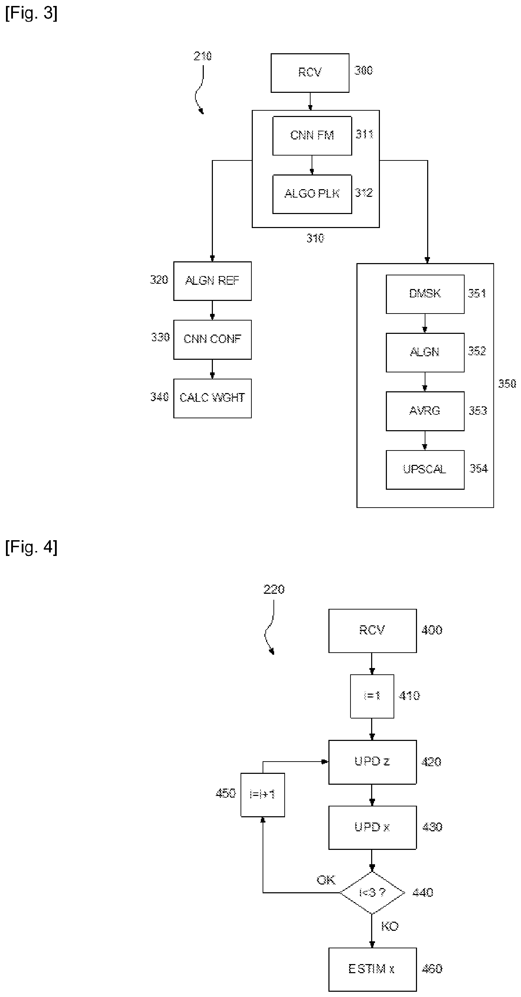

La phase d'initialisation 210 est mise en œuvre par le module d'initialisation 11 et est illustrée plus en détail sur la [Fig. 3].

Comme illustré sur la [Fig. 1], le module d'initialisation 11 comprend un réseau de neurones convolutif 15, un estimateur 17, une unité de déparasitage 19 et une unité de traitement 21.

Lors d'une opération 300, le module d'initialisation 11 reçoit une pluralité de couples formés chacun d'une image basse résolution yₖ et d'une durée d'exposition Δtₖ associée.

L'ensemble Y d'images basse résolution yₖ et l'ensemble Δ de durées d'exposition Δtₖ sont par exemple transmis au dispositif 5 par le capteur photographique 3.

Lors d'une opération 310, l'estimateur 17 estime, pour chaque image basse résolution yₖ, un paramètre de distorsion pₖ en appliquant un algorithme Lucas-Kanade.

La méthode Lucas-Kanade est une méthode différentielle connue de l'homme du métier et qui permet d'estimer, pour une image donnée, un flux optique caractérisant un mouvement apparent d'un objet présent dans la scène capturée et causé par un mouvement du capteur photographique utilisé. Cette méthode repose sur le principe que, dans le voisinage d'un pixel donné de l'image, le flux optique est constant. L'équation du flux optique est généralement résolue, au sein du voisinage considéré, par une méthode des moindres carrés.

Dans le cadre de l'invention, l'estimateur 17 compare chaque image basse résolution yₖ à l'image basse résolution de référence yₖ₀ pour l'estimation du paramètre de distorsion pₖ qui correspond donc à un flux optique entre l'image basse résolution yₖ et l'image basse résolution de référence yₖ₀. En d'autres termes, l'estimateur 17 estime le flux optique pₖ entre chaque image basse résolution yₖ et l'image basse résolution de référence yₖ₀.

Les paramètres de distorsion pₖ sont caractéristiques d'un opérateur de distorsion Wₖ (aussi connu sous le terme anglophone « *warping operator* ») qui traduit les tremblements ou mouvements du capteur photographique lors de l'acquisition de image basse résolution yₖ.

Étant donné que l'algorithme Lucas-Kanade prend, comme image de référence, l'image basse résolution de référence yₖ₀, on en déduit que l'opérateur de distorsion Wₖ₀ correspondant à l'image basse résolution de référence yₖ₀ est l'identité.

Dans le mode de réalisation décrit ici, l'opération 310 est mise en œuvre par l'implémentation d'opérations 311 et 312 décrites ci-après - et qui constituent en fait des sous-opérations de l'opération 310. Ce mode de réalisation utilise le réseau de neurones convolutif 15.

Ainsi, lors de l'opération 311, le réseau de neurones convolutif 15 reçoit, en entrée, les images basse résolution yₖ et génère, en sortie, une carte de caractéristiques (aussi désignée par le terme anglophone « *feature map* ») FMₖ pour chaque image basse résolution.

Lors de l'opération 312, l'estimateur 17 applique l'algorithme Lucas-Kanade à chaque carte de caractéristiques FMₖ pour estimer le paramètre de distorsion pₖ associé à chaque image basse résolution yₖ.

En particulier, chaque carte de caractéristiques FMₖ peut être traitée par l'estimateur 17 sous la forme d'une pyramide gaussienne. En traitement d'image, une pyramide désigne une représentation multi-résolution d'une image dans laquelle l'image est présente en plusieurs résolutions spatiales distinctes - l'image de plus grande résolution spatiale formant la base de la pyramide, tandis que l'image de plus faible résolution spatiale en forme le sommet. Chaque résolution spatiale de l'image constitue ainsi un « étage » de la pyramide.

Dans le cas en l'espèce, la pyramide gaussienne comprend par exemple six résolutions spatiales, donc six étages.

Il est connu d'appliquer l'algorithme Lucas-Kanade à des images sous forme pyramidale. Un tel algorithme PLK (acronyme anglophone pour « *Pyramidal Lucas-Kanade* ») consiste alors, pour comparer deux images, à comparer les étages correspondants des pyramides représentant respectivement les images considérées. Typiquement, trois itérations de l'algorithme Lucas-Kanade sont implémentées pour chaque étage.

En d'autres termes, dans le cas présent, l'estimateur 17 modélise chaque carte de caractéristiques FMₖ comme une pyramide gaussienne et applique un algorithme Lucas-Kanade pour déterminer le flux optique entre les résolutions spatiales correspondantes de la pyramide gaussienne modélisant la carte de caractéristiques FMₖ et de la pyramide gaussienne modélisant la carte de caractéristiques FMₖ₀. Il en résulte, après comparaison deux à deux des étages respectifs, le paramètre de distorsion pₖ de l'image basse résolution yₖ.

Le paramètre de distorsion pₖ correspond donc à un flux optique entre la carte de caractéristiques FMₖ et la carte de caractéristiques FMₖ₀ de l'image basse résolution de référence yₖ₀.

En variante, l'estimateur 17 applique directement l'algorithme Lucas-Kanade aux images basse résolution yₖ pour estimer le paramètre de distorsion pₖ associé à chacune. On comprend donc que le réseau de neurones convolutif 15 est optionnel et que l'estimateur 17 peut estimer les paramètres de distorsion pₖ sans les cartes de caractéristiques FMₖ.

Les paramètres de distorsion pₖ sont transmis à l'unité de déparasitage 19 et à l'unité de traitement 21.

L'unité de déparasitage 19 est agencée pour générer, pour chaque image basse résolution yₖ, un poids de déparasitage wₖ. Le poids de déparasitage wₖ caractérise à la fois la durée d'exposition Δtₖ de l'image basse résolution yₖ et son alignement par rapport à l'image basse résolution de référence yₖ₀. Par conséquent, l'unité de déparasitage 19 permet de conférer à chaque image basse résolution yₖ, aux fins de la mise en œuvre de la phase d'optimisation 220 par le module d'optimisation 13, un poids d'autant plus élevé que l'image basse résolution yₖ considérée a une durée d'exposition Δtₖ élevée par rapport aux autres images basse résolution yₖ et un meilleur alignement relativement à l'image basse résolution de référence yₖ₀.

Comme illustré sur la [Fig. 1], l'unité de déparasitage 19 comprend une unité d'alignement 23, un réseau de neurones convolutif 25 et un calculateur 27.

Lors d'une opération 320, l'unité d'alignement 23 aligne, par interpolation, l'image basse résolution de référence yₖ₀ en fonction de chaque paramètre de distorsion Pk.

L'interpolation mise en œuvre par l'unité d'alignement 23 est par exemple une interpolation bilinéaire qui présente l'avantage d'être rapide et d'offrir une qualité satisfaisante. Toutefois, d'autres méthodes d'interpolation peuvent être utilisées par l'unité d'alignement 23, notamment une interpolation bicubique ou une interpolation spline.

En d'autres termes, l'unité d'alignement 23 réalise, pour chaque paramètre de distorsion pₖ, un alignement de l'image basse résolution de référence yₖ₀. L'image basse résolution de référence yₖ₀ alignée en fonction de l'opérateur de distorsion Wₖ associé à l'image basse résolution yₖ est notée Wₖyₖ₀.

Lors d'une opération 330, le réseau de neurones convolutif 25 reçoit, en entrée, chaque image basse résolution yₖ et l'image basse résolution de référence alignée Wₖyₖ₀ en fonction du paramètre de distorsion pₖ associé et génère, en sortie, un facteur de confiance g_{ρ}.

On comprend ici qu'un facteur de confiance g_{ρ} est généré pour chaque image basse résolution yₖ ou, plus exactement, pour chaque opérateur de distorsion Wₖ.

Lors d'une opération 340, le calculateur 27 calcule, pour chaque image basse résolution yₖ, un poids de déparasitage wₖ en fonction de la durée d'exposition Δtₖ correspondant et du facteur de confiance g_{ρ} associé.

Chaque poids de déparasitage wₖ peut être calculé comme suit ${w}_{k} = \frac{Δ {t}_{k} {m}_{c} \left({y}_{k}\right)}{{\sum }_{j = 1}^{K} Δ {t}_{j} {m}_{c} \left({y}_{j}\right)} ⋅ {g}_{ρ} \left({y}_{k},{W}_{k}{y}_{k 0}\right)$ où : - wₖ est le poids de déparasitage calculé pour l'image basse résolution yₖ,
- m_{c}(·) est un masque binaire remplaçant par zéro toute valeur de pixel inférieure ou égale à un seuil c,
- g_{ρ} est le facteur de confiance paramétré par un paramètre ρ du réseau de neurones convolutif 25.

Le masque binaire m_{c} permet d'exclure les pixels saturés de chaque image basse résolution yₖ.

Il est à noter que, contrairement à la méthode proposée par les inventeurs B. Lecouat, J. Ponce et J. Mairal (2021), la présente invention effectue un déparasitage qui tient compte, le cas échéant, de l'hétérogénéité des images basse résolution. Les poids de déparasitage wₖ permettent en effet de donner une plus grande importance aux images basse résolution yₖ présentant une durée d'exposition Δtₖ plus élevée.

Comme mentionné précédemment, les paramètres de distorsion pₖ respectifs des images basse résolution yₖ générés par l'estimateur 17 sont également transmis à l'unité de traitement 21.

L'unité de traitement 21 est agencée pour former une image haute résolution initiale x₀ aux fins de la mise en œuvre de la phase d'optimisation 220 par le module d'optimisation 13. Cette image haute résolution initiale x₀ est destinée à constituer, lors de la phase d'optimisation 220, un point de départ pour la formation de l'image haute résolution *x̂*.

Lors d'une opération 350, l'unité de traitement 21 applique un dématriçage (plus connu sous le terme anglophone *« demosaicking* ») et une mise à l'échelle au moins à l'image basse résolution de référence (yk₀) pour obtenir une image haute résolution initiale x₀.

Plus exactement, une telle mise à l'échelle pour augmenter la résolution spatiale est appelée conversion ascendante. Le facteur de mise à l'échelle est noté s dans la suite de la description.

Une telle conversion ascendante peut être réalisée par interpolation. Là encore, la méthode d'interpolation utilisée par l'unité de traitement 21 peut être une interpolation bilinéaire, une interpolation bicubique ou une interpolation spline.

Il est à noter que la mise à l'échelle n'est pas nécessaire dans le cas où l'image formée par le dispositif 5 a la même résolution spatiale que les images de la rafale d'images reçues. Comme expliqué précédemment, un tel cas se produit notamment lorsque la rafale d'images concerne une scène sombre ou nocturne.

Avantageusement, l'unité de traitement 21 forme l'image haute résolution initiale x₀ à partir de toutes les images basse résolution yₖ et non pas seulement de l'image basse résolution de référence yₖ₀. Dans un tel cas, l'opération 350 est mise en œuvre par l'unité de traitement 21 par l'implémentation d'opérations 351, 352, 353 et 354 décrites ci-après - et qui constituent en fait des sous-opérations de l'opération 350.

Ainsi, lors de l'opération 351, l'unité de traitement 21 applique un dématriçage à chaque image basse résolution yₖ.

Lors de l'opération 352, l'unité de traitement 21 aligne par interpolation chaque image basse résolution yₖ dématricée en fonction du paramètre de distorsion pₖ associé.

De même que pour l'opération 320, plusieurs méthodes d'interpolation peuvent être utilisées par l'unité de traitement 21, notamment l'interpolation bilinéaire mais aussi l'interpolation bicubique ou l'interpolation spline.

Lors de l'opération 353, l'unité de traitement 21 forme une image basse résolution par moyennage (aussi connu sous le terme anglophone « *averaging* ») des images basse résolution dématricées et alignées.

Enfin, lors de l'opération 354, l'unité de traitement 21 met à l'échelle l'image basse résolution formée pour obtenir l'image haute résolution initiale x₀.

Là encore, la mise à l'échelle - ou conversion ascendante - n'est mise en œuvre que si le dispositif 5 est agencé pour former une image d'une résolution spatiale supérieure à celle des images de la rafale d'images reçues.

En référence à nouveau à la [Fig. 2], le procédé se poursuit avec une phase d'optimisation 220 mise en œuvre par le module d'optimisation 13 et illustrée plus en détail sur la [Fig. 4].

Le module d'optimisation 13 est agencé pour minimiser une fonction d'énergie quadratique à deux variables : une variable d'estimation de l'image de première résolution spatiale x et une variable auxiliaire z.

La fonction d'énergie quadratique à deux variables à minimiser est par exemple la suivante : $\frac{1}{2} {\sum }_{k = 1}^{K} {\left‖{w}_{k}⋅\left({y}_{k}-{A}_{k}z\right)\right‖}_{F}^{2} + \frac{η}{2} {\left‖x-z\right‖}_{F}^{2} + λΩ \left(x\right)$ avec : ${A}_{k} = Δ {t}_{k} {CD}_{s} {BW}_{k}$ où : - x est la variable d'estimation de l'image haute résolution,
- z est la variable auxiliaire,
- ∥·∥_{F} est une norme,
- η et λ sont des paramètres de la fonction d'énergie quadratique à deux variables,
- Ω(·) est une fonction de régularisation,
- C est un masque binaire modélisant une matrice de filtres colorés,
- s est le facteur de mise à l'échelle appliqué pour obtenir l'image haute résolution initiale x₀,
- Dₛ est un opérateur de décimation caractérisé par le facteur s de mise à l'échelle, et
- B est un opérateur de floutage.

Comme illustré sur la [Fig. 1], le module d'optimisation 13 comprend une unité de mise à jour 29 et un réseau de neurones convolutif 31.

Lors d'une opération 400, le module d'optimisation 13 reçoit les images basse résolution yₖ, les paramètres de distorsion pₖ associés, l'image haute résolution initiale x₀ et les poids de déparasitage wₖ respectivement associés aux images basse résolution yₖ.

La suite de la phase d'optimisation 220 consiste à minimiser la fonction d'énergie quadratique à deux variables par itérations successives selon une méthode de type HQS (acronyme anglophone pour « *half-quadratic splitting* »). Chaque itération comprend la mise à jour de la variable auxiliaire z et la mise à jour de la variable d'estimation de l'image haute résolution x.

Il est à noter que, dans la publication précédente des inventeurs B. Lecouat, J. Ponce et J. Mairal (2021), la fonction d'énergie quadratique à minimiser est une fonction à trois variables. En effet, en plus de la variable auxiliaire z et de la variable d'estimation de l'image haute résolution x, les paramètres de distorsion pₖ - rassemblés dans un vecteur p - sont également mis à jour selon une approche de Gauss-Newton. Chaque itération est ainsi alourdie d'une opération supplémentaire, ce qui demande des ressources de calcul supplémentaires et représente un surcoût de temps. En effet, dans la présente invention, les paramètres de distorsion pₖ ne varient pas pendant la phase d'optimisation : on utilise directement les paramètres de distorsion pₖ estimés par l'estimateur 17.

Lors d'une opération 410, le module d'optimisation 13 initialise la variable auxiliaire z et la variable d'estimation de l'image haute résolution x avec l'image haute résolution initiale x₀.

Par ailleurs, une variable locale i, correspondant au nombre d'itérations, est initialisée à 1.

Lors d'une opération 420, l'unité de mise à jour 29 met à jour la variable auxiliaire z par une descente de gradient en fonction des images basse résolution yₖ, des paramètres de distorsion associés pₖ et des poids de déparasitage wₖ.

Par exemple, l'unité de mise à jour 29 met à jour la variable auxiliaire z par descente de gradient comme suit : $z ← z - δ \left(η\left(z-x\right)+{\sum }_{k = 1}^{K} {A}_{k}^{T} \left({w}_{k}^{2}⋅\left({A}_{k}z-{y}_{k}\right)\right)\right)$ où : δ est un paramètre de la descente de gradient.

Lors d'une opération 430, le module d'optimisation 13 met à jour la variable d'estimation de l'image haute résolution x en fonction de la variable auxiliaire z mise à jour.

Avantageusement, le réseau de neurones convolutif 31 reçoit, en entrée, la variable auxiliaire z mise à jour et génère, en sortie, la variable d'estimation de l'image haute résolution x mise à jour.

Par ailleurs, le réseau de neurones convolutif 31 peut mettre en œuvre un partage de poids (plus connu sous le terme anglophone *« weight-sharing* ») d'une itération à l'autre.

Le réseau de neurones convolutif 31 permet ainsi, à chaque itération, de réaliser un débruitage (aussi désigné par le terme anglophone « *denoising* ») de la variable d'estimation de l'image haute résolution x.

Alternativement, il est aussi possible d'utiliser l'opérateur proximal G de la fonction de régularisation Ω pour mettre à jour la variable d'estimation de l'image haute résolution x et donc de ne pas avoir recours à un réseau de neurones convolutif tel que le réseau de neurones convolutif 31. Le recours à l'opérateur proximal G a notamment fait l'objet d'une publication de N. Parikh et S.P. Boyd (2014) : « Proximal Algorithms » (Fondations and Trends in Optimization, vol. 1, No. 3, p. 127-239).

Le débruitage peut ainsi être mis en œuvre par un filtrage bilatéral ou par un opérateur proximal d'une fonction de régularisation telle que la variation totale (parfois désignée par l'acronyme anglophone TVR pour « *total variation regularization* »).

Toutefois, préférentiellement, le réseau de neurones convolutif 31 est sollicité pour mettre à jour la variable d'estimation de l'image haute résolution par un opérateur G_{ω} vérifiant : ${G}_{ω} \left(z, γ\right)$ où : - ω est un paramètre du réseau de neurones convolutif 31, et
- γ est un paramètre vérifiant : $γ = \frac{λ}{η}$.

Lors d'une opération 440, le module d'optimisation 13 détermine si un nombre prédéterminé d'itérations - ou nombre de boucles - a été atteint. Dans l'exemple illustré sur la [Fig. 4], ce nombre d'itérations est fixé à 3. Toutefois, le nombre d'itérations peut être strictement supérieur à 3.

Si le nombre prédéterminé d'itérations n'a pas été atteint, la phase d'optimisation 220 continue avec une opération 450 au cours de laquelle la variable locale i est incrémentée d'un pas de 1.

En revanche, si le nombre prédéterminé d'itérations a été atteint, la phase d'optimisation 220 se termine avec une opération 460 qui correspond à la sortie de l'image haute résolution estimée *x̂*, c'est-à-dire la variable d'estimation de l'image haute résolution x mise à jour au cours de la dernière itération.

L'image haute résolution estimée *x̂* est donc l'image formée par le dispositif 5 à partir de la pluralité de couples formés chacun d'une image basse résolution yₖ et d'une durée d'exposition Δtₖ.

Comme expliqué précédemment, le dispositif 5 a recours à un ou plusieurs réseaux de neurone convolutifs. Typiquement, au moins un réseau de neurones convolutif parmi les réseaux de neurones convolutifs 15, 25 et 31 présente une architecture de type U-net.

Un U-net est un réseau de neurones dit « entièrement convolutif » généralement dédié à la vision par ordinateur (plus connue sous l'expression anglophone « *Computer Vision* ») et plus particulièrement à la segmentation sémantique, notamment dans le domaine biomédical.

Un U-net comprend une partie de contraction - aussi appelée « encodeur » - constitué d'un assemblage de couches de convolution, d'unité linéaire rectifiée (« *ReLU* ») et de *max-pooling* pour récupérer le contexte d'une image et une partie d'expansion - aussi appelée « décodeur » - qui exploite les informations obtenues par la partie de contraction pour obtenir une localisation précise par convolution transposée et concaténation ascendante. La partie d'expansion permet ainsi de retrouver la taille initiale de l'image analysée.

À titre d'exemple, K. Zhang et al. décrivent l'utilisation d'un réseau de neurones convolutif de type U-net dans la publication (2020) : « Deep unfolding network for image-super-resolution » (Proceedings of the Conference on Computer Vision and Pattern Recognition (CVPR), p. 3217-3226).

Toutefois, d'autres architectures de réseaux de neurones convolutifs peuvent être utilisées.

Par conséquent et comme illustré sur la [Fig. 2], il peut être avantageux de mettre en œuvre une phase d'entraînement préalable 200 du dispositif 5 avec un ensemble de données d'apprentissage. Cet ensemble de données d'apprentissage comprend une image haute résolution et une pluralité de couples formés chacun d'une image basse résolution et d'une durée d'exposition.

Par souci de simplification, les notations utilisées ci-après pour désigner les données d'apprentissage sont similaires à celles utilisées pour décrire la phase d'initialisation 210 et la phase d'optimisation 220.

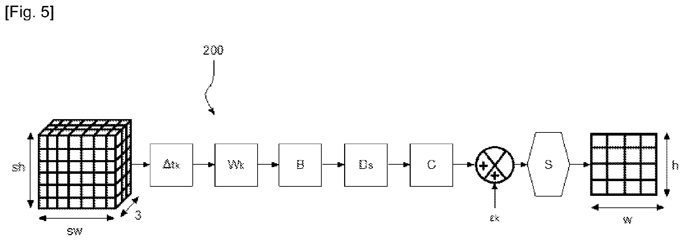

La phase d'entraînement préalable 200, et plus précisément la génération des données d'apprentissage, est illustrée sur la [Fig. 5].

La génération des données d'apprentissage est semi-synthétique. En d'autres termes, le principe est de partir d'une image haute résolution x⁽¹⁾ et de lui appliquer des opérations successives de manière à obtenir des images basse résolution yₖ⁽¹⁾.

Dans l'exemple illustré sur la [Fig. 5], l'image haute résolution x⁽¹⁾ est une image de dimensions sh x sw x 3. Ici, la dimension 3 correspond aux canaux RVB (acronyme de « rouge, vert, bleu » ; ou RGB en anglais) : l'image haute résolution x⁽¹⁾ est une image en couleur. Les images basse résolution yₖ⁽¹⁾ sont ici des images de dimensions h x w. Il y a donc un facteur d'échelle s entre les images brutes yₖ⁽¹⁾ générées et l'image haute résolution x⁽¹⁾ de départ.

Pour chaque image basse résolution yₖ⁽¹⁾ qu'on souhaite générer, on utilise en entrée une durée d'exposition Δtₖ⁽¹⁾ et un opérateur de distorsion wₖ⁽¹⁾. L'opérateur de distorsion Wₖ⁽¹⁾ permet de simuler des tremblements ou mouvements d'un capteur photographique.

Par ailleurs, pour toutes les images basse résolution yₖ⁽¹⁾ qu'on souhaite générer, on utilise un opérateur de floutage B⁽¹⁾ (ou *« blur* » en anglais), un opérateur de décimation Dₛ⁽¹⁾ pour réduire la résolution de l'image d'un facteur d'échelle s et un masque binaire C⁽¹⁾ modélisant une matrice de filtres colorés.

Un bruit εₖ⁽¹⁾ propre à chaque image basse résolution yₖ⁽¹⁾ est également ajouté à l'image obtenue.

Chaque image basse résolution yₖ⁽¹⁾ est ainsi générée comme suit à partir de l'image haute résolution x : ${{y}_{k}}^{\left(1\right)} = {{A}_{k}}^{\left(1\right)} {x}^{\left(1\right)} + {{ε}_{k}}^{\left(1\right)}$ avec : ${{A}_{k}}^{\left(1\right)} = Δ {{t}_{k}}^{\left(1\right)} {C}^{\left(1\right)} {{D}_{s}}^{\left(1\right)} {B}^{\left(1\right)} {{W}_{k}}^{\left(1\right)}$ où : - x⁽¹⁾ est l'image haute résolution de l'ensemble de données d'apprentissage,
- yₖ⁽¹⁾ est la k-ème image basse résolution de l'ensemble de données d'apprentissage,
- Δtₖ⁽¹⁾ est la durée d'exposition de l'image basse résolution yₖ⁽¹⁾,
- Wₖ⁽¹⁾ est l'opérateur de distorsion associé à l'image basse résolution yₖ⁽¹⁾,
- C⁽¹⁾ est le masque binaire modélisant une matrice de filtres colorés,
- Dₛ⁽¹⁾ est l'opérateur de décimation caractérisé par le facteur s de mise à l'échelle,
- B⁽¹⁾ est l'opérateur de floutage, et
- εₖ⁽¹⁾ est le bruit associé à l'image basse résolution yₖ⁽¹⁾.

Par ailleurs, lorsque l'image haute résolution x⁽¹⁾ est une carte d'éclairement et que les images basse résolution yₖ⁽¹⁾ générées sont des images brutes, il convient d'appliquer la fonction S décrite précédemment qui, à une valeur réelle positive, associe un entier compris entre 0 et 2^{q}-1, q étant un entier strictement positif. On a alors l'expression suivante : ${{y}_{k}}^{\left(1\right)} = S \left({{A}_{k}}^{\left(1\right)}{x}^{\left(1\right)}+{{ε}_{k}}^{\left(1\right)}\right)$

L'ensemble de données d'apprentissage ainsi généré est ensuite utilisé pour entraîner le dispositif 5. En d'autres termes, le dispositif 5 reçoit les images basse résolution yₖ⁽¹⁾ et les durées d'exposition Δtₖ⁽¹⁾ de l'ensemble de données d'apprentissage et leur appliquer la phase d'initialisation 210 et la phase d'optimisation 220 détaillées plus haut. L'image estimée x⁽¹⁾ est comparée à l'image x⁽¹⁾ de l'ensemble de données d'apprentissage - qui est donc connue -, ce qui permet de paramétrer le dispositif 5, et notamment les différents réseaux de neurones convolutifs utilisés.

Les paramètres à apprendre sont par exemple les poids des couches du réseau de neurones convolutif 15, le paramètre ρ du facteur de confiance g_{ρ} et les poids des couches du réseau de neurones convolutif 25, les paramètres λ et η de la fonction d'énergie quadratique minimisée par le module d'optimisation 13, le paramètre δ de la descente de gradient mise en œuvre par l'unité de mise à jour 29, les paramètres ω et γ et les poids des couches du réseau de neurones convolutif 31.

En rassemblant l'ensemble de ces paramètres dans un vecteur θ, on peut modéliser le dispositif 5 par un moteur d'inférence agencé pour appliquer F_{θ} à un ensemble Y⁽¹⁾ d'images basse résolution yₖ⁽¹⁾ et à un ensemble Δ⁽¹⁾ de durées d'exposition Δtₖ⁽¹⁾ associées et en tirer une image haute résolution estimée *x̂*⁽¹⁾.

En d'autres termes : ${\hat{x}}^{\left(1\right)} = {F}_{θ} \left({Y}^{\left(1\right)}, {Δ}^{\left(1\right)}\right)$

Avantageusement, la phase d'entraînement préalable 200 est supervisée en utilisant plusieurs ensembles de données d'apprentissage comprenant chacun une image haute résolution x⁽ⁱ⁾ et une pluralité de couples formés chacun d'une image basse résolution yₖ⁽ⁱ⁾ et d'une durée d'exposition Δtₖ⁽ⁱ⁾. La phase d'entraînement préalable 200 supervisée permet de paramétrer le dispositif 5 de manière à minimiser la quantité suivante : ${\sum }_{i = 1}^{n} {\left‖{x}^{\left(i\right)}-{\hat{x}}^{\left(i\right)}\right‖}_{1} = {\sum }_{i = 1}^{n} {\left‖{x}^{\left(i\right)}-{F}_{θ}\left({Y}^{\left(i\right)}, {Δ}^{\left(i\right)}\right)\right‖}_{1}$ où : - *x*^{(*i*)} est l'image haute résolution du i-ème ensemble de données d'apprentissage,
- *x̂*^{(*i*)} est l'image haute résolution estimée par le dispositif 5 à partir du i-ème ensemble de données d'apprentissage,
- Y⁽ⁱ⁾ est l'ensemble des images basse résolution yₖ⁽ⁱ⁾ du i-ème ensemble de données d'apprentissage,
- Δ⁽ⁱ⁾ est l'ensemble des durées d'exposition Δtₖ⁽ⁱ⁾ du i-ème ensemble de données d'apprentissage, et
- n est le nombre d'ensembles de données d'apprentissage.

## Revendications

1. Dispositif (5) de formation d'une image d'une première résolution spatiale (*x̂*) à partir d'une pluralité de couples formés chacun d'une image d'une deuxième résolution spatiale (yₖ) inférieure ou égale à la première résolution spatiale et d'une durée d'exposition (Δtₖ), ledit dispositif (5) comprenant :
- un module d'initialisation (11) agencé pour recevoir les images de deuxième résolution spatiale (yₖ) et comprenant :
• un estimateur (17) agencé pour estimer, pour chaque image de deuxième résolution spatiale (yₖ), un paramètre de distorsion en appliquant un algorithme Lucas-Kanade,
• une unité de traitement (21) agencée pour appliquer, au moins à une image de deuxième résolution spatiale de référence (yk₀) parmi les images de deuxième résolution spatiale (yₖ), un dématriçage et, lorsque la deuxième résolution spatiale est inférieure à la première résolution spatiale, une mise à l'échelle pour obtenir une image de première résolution spatiale initiale (x₀), et
- un module d'optimisation (13) agencé pour recevoir les images de deuxième résolution spatiale (yₖ), les paramètres de distorsion (pₖ) associés et l'image de première résolution spatiale initiale (x₀) et pour minimiser une fonction d'énergie quadratique paramétrée par une variable d'estimation de l'image de première résolution spatiale (x) et une variable auxiliaire (z), ladite variable d'estimation de l'image de première résolution spatiale (x) et ladite variable auxiliaire (z) étant initialisées sur la base de l'image de première résolution spatiale initiale (x₀), la minimisation étant réalisée par itérations successives comprenant chacune la mise à jour de la variable auxiliaire (z) par une descente de gradient en fonction des images de deuxième résolution spatiale (yₖ) et des paramètres de distorsion (pₖ) associés et la mise à jour de la variable d'estimation de l'image de première résolution spatiale (x) en fonction de la variable auxiliaire (z) mise à jour,
ledit dispositif (5) étant **caractérisé en ce que** le module d'initialisation (11) est agencé pour recevoir en outre les durées d'exposition (Δtₖ) respectives des images de deuxième résolution spatiale (yₖ) et comprend en outre :
• une unité d'alignement (23) agencée pour aligner par interpolation, pour chaque image de deuxième résolution spatiale (yₖ), l'image de deuxième résolution spatiale de référence (yₖ₀) en fonction du paramètre de distorsion (pₖ) associé à ladite image de deuxième résolution spatiale (yₖ),
• un réseau de neurones convolutif (25) agencé pour recevoir, en entrée, chaque image de deuxième résolution spatiale (yₖ) et l'image de deuxième résolution spatiale de référence alignée (Wₖyₖ₀) en fonction du paramètre de distorsion (pₖ) associé et pour générer, en sortie, un facteur de confiance (g_{ρ}),
• un calculateur (27) agencé pour calculer, pour chaque image de deuxième résolution spatiale (yₖ), un poids de déparasitage (wₖ) en fonction de la durée d'exposition (Δtₖ) correspondante et du facteur de confiance (g_{ρ}) associé,
et **en ce que** le module d'optimisation (13) est agencé pour recevoir en outre les poids de déparasitage (wₖ) respectivement associés aux images de deuxième résolution spatiale (yₖ) et comprend :
• une unité de mise à jour (29) agencée pour mettre à jour la variable auxiliaire (z) par descente de gradient en fonction en outre des poids de déparasitage (wₖ).

2. Dispositif (5) selon la revendication 1, **caractérisé en ce que** le module d'initialisation (11) comprend en outre :
• un réseau de neurones convolutif (15) agencé pour recevoir, en entrée, les images de deuxième résolution spatiale (yₖ) et pour générer, en sortie, une carte de caractéristiques (FMₖ) pour chaque image de deuxième résolution spatiale (yₖ),
et **en ce que** l'estimateur (17) est agencé pour appliquer l'algorithme Lucas-Kanade à chaque carte de caractéristiques (FMₖ) pour estimer le paramètre de distorsion (pₖ) associé à chaque image de deuxième résolution spatiale (yₖ).

3. Dispositif (5) selon la revendication 2, **caractérisé en ce que** l'estimateur (17) est agencé pour traiter chaque carte de caractéristiques (FMₖ), pour l'application de l'algorithme Lucas-Kanade, sous la forme d'une pyramide gaussienne.

4. Dispositif (5) selon l'une des revendications précédentes, **caractérisé en ce que** le module d'optimisation (13) comprend en outre :
• un réseau de neurones convolutif (31) agencé pour recevoir, en entrée, la variable auxiliaire (z) mise à jour et pour générer, en sortie, la variable d'estimation de l'image de première résolution spatiale (x) mise à jour.

5. Dispositif (5) selon la revendication 4, **caractérisé en ce que** le réseau de neurones convolutif (31) du module d'optimisation (13) est agencé pour mettre en œuvre un partage de poids d'une itération à l'autre.

6. Dispositif (5) selon l'une des revendications précédentes, **caractérisé en ce que** le calculateur (27) est agencé pour calculer chaque poids de déparasitage (wₖ) comme suit : ${w}_{k} = \frac{Δ {t}_{k} {m}_{c} \left({y}_{k}\right)}{{\sum }_{j = 1}^{K} Δ {t}_{j} {m}_{c} \left({y}_{j}\right)} ⋅ {g}_{ρ} \left({y}_{k},{W}_{k}{y}_{k 0}\right)$ où : - yₖ est la k-ème image de deuxième résolution spatiale,
- wₖ est le poids de déparasitage calculé pour l'image de deuxième résolution spatiale yₖ,
- Δtₖ est la durée d'exposition de l'image de deuxième résolution spatiale yₖ,
- K est le nombre d'images de deuxième résolution spatiale,
- m_{c}(·) est un masque binaire remplaçant par zéro toute valeur de pixel inférieure ou égale à un seuil c,
- g_{ρ} est le facteur de confiance paramétré par un paramètre ρ du réseau de neurones convolutif (25),
- Wₖ est un opérateur de distorsion **caractérisé par** le paramètre de distorsion (pₖ) associé à l'image de deuxième résolution spatiale yₖ, et
- yₖ₀ est l'image de deuxième résolution spatiale de référence.

7. Dispositif (5) selon l'une des revendications précédentes, **caractérisé en ce que** l'unité d'alignement (23) est agencée pour aligner l'image de deuxième résolution spatiale de référence (yₖ₀) en fonction de chaque paramètre de distorsion (pₖ) par interpolation bilinéaire.

8. Dispositif (5) selon l'une des revendications précédentes, **caractérisé en ce que** l'unité de traitement (21) est agencé pour dématricer chaque image de deuxième résolution spatiale (yₖ), aligner par interpolation chaque image de deuxième résolution spatiale dématricée en fonction du paramètre de distorsion (pₖ) associé, former une image de deuxième résolution spatiale par moyennage des images de deuxième résolution spatiale dématricées et alignées et, lorsque la deuxième résolution spatiale est inférieure à la première résolution spatiale, mettre à l'échelle l'image de deuxième résolution spatiale formée pour obtenir l'image de première résolution spatiale initiale (x₀).

9. Dispositif (5) selon l'une des revendications précédentes, **caractérisé en ce que** l'unité de mise à jour (29) est agencée pour mettre à jour la variable auxiliaire (z) par descente de gradient comme suit : $z ← z - δ \left(η\left(z-x\right)+{\sum }_{k = 1}^{K} {A}_{k}^{T} \left({w}_{k}^{2}⋅\left({A}_{k}z-{y}_{k}\right)\right)\right)$ avec : ${A}_{k} = Δ {t}_{k} {CD}_{s} {BW}_{k}$ où : - z est la variable auxiliaire,
- x est la variable d'estimation de l'image de première résolution spatiale,
- yₖ est la k-ème image de deuxième résolution spatiale,
- K est le nombre d'images de deuxième résolution spatiale,
- wₖ est le poids de déparasitage associé à l'image de deuxième résolution spatiale yₖ,
- Δtₖ est la durée d'exposition de l'image de deuxième résolution spatiale yₖ,
- Wₖ est un opérateur de distorsion **caractérisé par** le paramètre de distorsion (pₖ) associé à l'image de deuxième résolution spatiale yₖ,
- C est un masque binaire modélisant une matrice de filtres colorés,
- s est le facteur de mise à l'échelle utilisé pour obtenir l'image de première résolution spatiale initiale (x₀),
- Dₛ est un opérateur de décimation **caractérisé par** le facteur s de mise à l'échelle,
- B est un opérateur de floutage,
- δ est un paramètre de la descente de gradient, et
- η est un paramètre de la fonction d'énergie quadratique à deux variables.

10. Dispositif (5) selon l'une des revendications précédentes, **caractérisé en ce que** le module d'optimisation (13) est agencé pour implémenter trois itérations successives.

11. Dispositif (5) selon l'une des revendications précédentes, **caractérisé en ce qu'**au moins un réseau de neurones convolutif (15, 25, 31) présente une architecture de type U-net.

12. Procédé de formation d'une image d'une première résolution spatiale (*x̂*) à partir d'une pluralité de couples formés chacun d'une image d'une deuxième résolution spatiale (yₖ) inférieure ou égale à la première résolution spatiale et d'une durée d'exposition (Δtₖ), ledit procédé étant mise en œuvre par le dispositif (5) selon l'une des revendications précédentes et comprenant :
- une phase d'initialisation (210) comprenant les opérations suivantes :
recevoir (300) les images de deuxième résolution spatiale (yₖ),
estimer (310), pour chaque image de deuxième résolution spatiale (yₖ), un paramètre de distorsion en appliquant un algorithme Lucas-Kanade,
appliquer, au moins à une image de deuxième résolution spatiale de référence (yk₀) parmi les images de deuxième résolution spatiale (yₖ), un dématriçage et, lorsque la deuxième résolution spatiale est inférieure à la première résolution spatiale, une mise à l'échelle pour obtenir une image de première résolution spatiale initiale (x₀), et
- une phase d'optimisation (220) comprenant les opérations suivantes :
recevoir (400) les images de deuxième résolution spatiale (yₖ), les paramètres de distorsion (pₖ) associés et l'image de première résolution spatiale initiale (x₀),
minimiser une fonction d'énergie quadratique paramétrée par une variable d'estimation de l'image de première résolution spatiale (x) et une variable auxiliaire (z), ladite variable d'estimation de l'image de première résolution spatiale (x) et ladite variable auxiliaire (z) étant initialisées sur la base de l'image de première résolution spatiale initiale (x₀), la minimisation étant réalisée par itérations successives comprenant chacune la mise à jour (420) de la variable auxiliaire (z) par une descente de gradient en fonction des images de deuxième résolution spatiale (yₖ) et des paramètres de distorsion (pₖ) associés et la mise à jour (430) de la variable d'estimation de l'image de première résolution spatiale (x) en fonction de la variable auxiliaire (z) mise à jour, ledit procédé étant **caractérisé en ce que** la phase d'initialisation (210) comprend les opérations suivantes :
recevoir (300) en outre les durées d'exposition (Δtₖ) respectives des images de deuxième résolution spatiale (yₖ),
aligner (320) par interpolation, pour chaque image de deuxième résolution spatiale (yₖ), l'image de deuxième résolution spatiale de référence (yₖ₀) en fonction du paramètre de distorsion (pₖ) associé à ladite image de deuxième résolution spatiale (Yk),
utiliser (330) un réseau de neurones convolutif (25) recevant, en entrée, chaque image de deuxième résolution spatiale (yₖ) et l'image de deuxième résolution spatiale de référence alignée (Wₖyₖ₀) en fonction du paramètre de distorsion (pₖ) associé et générant, en sortie, un facteur de confiance (g_{ρ}),
calculer (340), pour chaque image de deuxième résolution spatiale (yₖ), un poids de déparasitage (wₖ) en fonction de la durée d'exposition (Δtₖ) correspondante et du facteur de confiance (g_{ρ}) associé,
et **en ce que** la phase d'optimisation (220) comprend les opérations suivantes :
recevoir (400) en outre les poids de déparasitage (wₖ) respectivement associés aux images de deuxième résolution spatiale (yₖ),
mettre à jour (420) la variable auxiliaire (z) par descente de gradient en fonction en outre des poids de déparasitage (wₖ).

13. Procédé selon la revendication 12, **caractérisé en ce qu'**il comprend en outre une phase d'entraînement préalable (200) du dispositif (5) avec un ensemble de données d'apprentissage comprenant une image de première résolution spatiale (x⁽¹⁾) et une pluralité de couples formés chacun d'une image de deuxième résolution spatiale (yₖ⁽¹⁾) et d'une durée d'exposition (Δtₖ⁽¹⁾), chaque image de deuxième résolution spatiale (yₖ⁽¹⁾) étant générée à partir de l'image de première résolution spatiale (x⁽¹⁾) comme suit : ${{y}_{k}}^{\left(1\right)} = {{A}_{k}}^{\left(1\right)} {x}^{\left(1\right)} + {{ε}_{k}}^{\left(1\right)}$ avec : ${{A}_{k}}^{\left(1\right)} = Δ {{t}_{k}}^{\left(1\right)} {C}^{\left(1\right)} {{D}_{s}}^{\left(1\right)} {B}^{\left(1\right)} {{W}_{k}}^{\left(1\right)}$ où : - x⁽¹⁾ est l'image de première résolution spatiale de l'ensemble de données d'apprentissage,
- yₖ⁽¹⁾ est la k-ème image de deuxième résolution spatiale de l'ensemble de données d'apprentissage,
- Δtₖ⁽¹⁾ est la durée d'exposition de l'image de deuxième résolution spatiale yₖ⁽¹⁾,
- Wₖ⁽¹⁾ est un opérateur de distorsion associé à l'image de deuxième résolution spatiale yₖ⁽¹⁾,
- C⁽¹⁾ est un masque binaire modélisant une matrice de filtres colorés,
- Dₛ⁽¹⁾ est un opérateur de décimation **caractérisé par** un facteur s de mise à l'échelle,
- B⁽¹⁾ est un opérateur de floutage,
- εₖ⁽¹⁾ est un bruit associé à l'image de deuxième résolution spatiale yₖ⁽¹⁾.

14. Procédé selon la revendication 13, **caractérisé en ce que** la phase d'entraînement préalable (200) est supervisée en utilisant plusieurs ensembles de données d'apprentissage comprenant chacun une image de première résolution spatiale (x⁽ⁱ⁾) et une pluralité de couples formés chacun d'une image de deuxième résolution spatiale (yₖ⁽ⁱ⁾) et d'une durée d'exposition (Δtₖ⁽ⁱ⁾), ladite phase d'entraînement préalable (200) supervisée permettant de paramétrer ledit dispositif (5) de manière à minimiser la quantité suivante : ${\sum }_{i = 1}^{n} {\left‖{x}^{\left(i\right)}-{\hat{x}}^{\left(i\right)}\right‖}_{1}$ où : - *x*^{(*i*)} est l'image de première résolution spatiale du i-ème ensemble de données d'apprentissage,
- *x̂*^{(*i*)} est l'image de première résolution spatiale estimée par le dispositif (5) à partir du i-ème ensemble de données d'apprentissage, et
- n est le nombre d'ensembles de données d'apprentissage.

15. Programme informatique comprenant des instructions dont l'exécution par au moins un processeur (9) se traduit par la mise en œuvre du procédé selon l'une des revendications 12 à 14.

## Patentansprüche

1. Vorrichtung (5) zur Erzeugung eines Bildes mit einer ersten räumlichen Auflösung (*x̂*) aus einer Vielzahl von Paaren, die jeweils aus einem Bild mit einer zweiten räumlichen Auflösung (yₖ) gebildet werden, die kleiner oder gleich der ersten räumlichen Auflösung ist, und einer Expositionszeit (Δtₖ), wobei die Vorrichtung (5) Folgendes aufweist:
• ein Initialisierungsmodul (11), das zum Empfangen der Bilder mit zweiter räumlicher Auflösung (yₖ) ausgelegt ist und Folgendes aufweist:
• einen Schätzer (17), der so ausgelegt ist, dass er für jedes Bild mit zweiter räumlicher Auflösung (yₖ) einen Verzerrungsparameter durch Anwendung eines Lucas-Kanade-Algorithmus schätzt,
• eine Verarbeitungseinheit (21), die so ausgelegt ist, dass sie zumindest auf ein Referenzbild mit zweiter räumlicher Auflösung (yₖ₀) unter den Bildern mit zweiter räumlicher Auflösung (yₖ), ein Demosaicing und, sofern die zweite räumliche Auflösung geringer ist als die erste räumliche Auflösung, eine Skalierung anwendet, um ein Anfangsbild mit erster räumlicher Auflösung (x₀) zu erhalten, und
- ein Optimierungsmodul (13), das dazu ausgelegt ist, die Bilder mit zweiter räumlicher Auflösung (yₖ), die zugehörigen Verzerrungsparameter (pₖ) und das Anfangsbild mit erster räumlicher Auflösung (x₀) zu empfangen und eine quadratische Energiefunktion zu minimieren, die durch eine Schätzvariable des Bildes mit erster räumlicher Auflösung (x) und eine Hilfsvariable (z) parametrisiert ist, wobei die Schätzvariable für das Bild mit erster räumlicher Auflösung (x) und die Hilfsvariable (z) auf der Grundlage des Anfangsbildes mit erster räumlicher Auflösung (x₀) initialisiert werden, wobei die Minimierung durch aufeinanderfolgende Iterationen erfolgt, die jeweils die Aktualisierung der Hilfsvariablen (z) mittels Gradientenabstieg in Abhängigkeit von den Bildern mit zweiter räumlicher Auflösung (yₖ) und den zugehörigen Verzerrungsparametern (pₖ) sowie die Aktualisierung der Schätzvariablen für das Bild mit erster räumlicher Auflösung (x) in Abhängigkeit von der aktualisierten Hilfsvariablen (z) aufweisen, wobei die Vorrichtung (5) **dadurch gekennzeichnet ist, dass** das Initialisierungsmodul (11) so ausgelegt ist, dass es ferner die jeweiligen Expositionszeiten (Δtₖ) der Bilder mit zweiter räumlicher Auflösung (yₖ) empfängt, und darüber hinaus Folgendes aufweist:
• eine Ausrichtungseinheit (23), die so ausgelegt ist, dass sie für jedes Bild mit zweiter räumlicher Auflösung (yₖ) das Referenzbild mit zweiter räumlicher Auflösung (yₖ₀) in Abhängigkeit von dem Verzerrungsparameter (pₖ), der dem Bild mit zweiter räumlicher Auflösung (yₖ) zugeordnet ist, mittels Interpolation ausrichtet,
• ein konvolutionelles neuronales Netzwerk (25), das so ausgelegt ist, dass es als Eingabe jedes Bild mit zweiter räumlicher Auflösung (yₖ) und das ausgerichtete Referenzbild mit zweiter räumlicher Auflösung (Wₖyₖ₀) in Abhängigkeit vom zugehörigen Verzerrungsparameter (pₖ) empfängt und als Ausgabe einen Konfidenzfaktor (gₚ) erzeugt,
• einen Rechner (27), der so ausgelegt ist, dass er für jedes Bild mit zweiter räumlicher Auflösung (yₖ) ein Rauschunterdrückungsgewicht (wₖ) in Abhängigkeit von der entsprechenden Expositionszeit (Δtₖ) und dem zugehörigen Konfidenzfaktor (g_{ρ}) berechnet,
und dass das Optimierungsmodul (13) so ausgelegt ist, dass es ferner die den Bildern mit zweiter räumlicher Auflösung (yₖ) jeweils zugeordneten Rauschunterdrückungsgewichte (wₖ) empfängt, und Folgendes aufweist:
• eine Aktualisierungseinheit (29), die so ausgelegt ist, dass sie die Hilfsvariable (z) mittels Gradientenabstieg ferner in Abhängigkeit von den Rauschunterdrückungsgewichten (wₖ) aktualisiert.

2. Vorrichtung (5) nach Anspruch 1, **dadurch gekennzeichnet, dass** das Initialisierungsmodul (11) darüber hinaus Folgendes aufweist:
• ein konvolutionelles neuronales Netzwerk (15), das so ausgelegt ist, dass es als Eingabe die Bilder mit zweiter räumlicher Auflösung (yₖ) empfängt und als Ausgabe für jedes Bild mit zweiter räumlicher Auflösung (yₖ) eine Merkmalskarte (FMₖ) erzeugt,
und dass der Schätzer (17) so ausgelegt ist, dass er den Lucas-Kanade-Algorithmus auf jede Merkmalskarte (FMₖ) anwendet, um den jedem Bild mit zweiter räumlicher Auflösung (yₖ) zugeordneten Verzerrungsparameter (pₖ) zu schätzen.

3. Vorrichtung (5) nach Anspruch 2, **dadurch gekennzeichnet, dass** der Schätzer (17) so ausgelegt ist, dass er jede Merkmalskarte (FMₖ) zur Anwendung des Lucas-Kanade-Algorithmus in Form einer Gaußschen Pyramide verarbeitet.

4. Vorrichtung (5) nach einem der vorhergehenden Ansprüche, **dadurch gekennzeichnet, dass** das Optimierungsmodul (13) darüber hinaus Folgendes aufweist:
• ein konvolutionelles neuronales Netzwerk (31), das so ausgelegt ist, dass es als Eingabe die aktualisierte Hilfsvariable (z) empfängt und als Ausgabe die aktualisierte Schätzvariable des Bildes mit erster räumlicher Auflösung (x) erzeugt.

5. Vorrichtung (5) nach Anspruch 4, **dadurch gekennzeichnet, dass** das konvolutionelle neuronale Netzwerk (31) des Optimierungsmoduls (13) so ausgelegt ist, dass es eine Gewichtsweitergabe von einer Iteration zur nächsten durchführt.

6. Vorrichtung (5) nach einem der vorhergehenden Ansprüche, **dadurch gekennzeichnet, dass** der Rechner (27) so ausgelegt ist, dass er jedes Rauschunterdrückungsgewicht (wₖ) wie folgt berechnet: ${w}_{k} = \frac{Δ {t}_{k} {m}_{c} \left({y}_{k}\right)}{{\sum }_{j = 1}^{K} Δ {t}_{j} {m}_{c} \left({y}_{j}\right)} ⋅ {g}_{ρ} \left({y}_{k},{W}_{k}{y}_{k 0}\right)$ wobei: - yₖ das k-te Bild mit zweiter räumlicher Auflösung ist,
- wₖ das für das Bild mit zweiter räumlicher Auflösung yₖ berechnete Rauschunterdrückungsgewicht ist,
- Δtₖ die Expositionszeit für das Bild mit zweiter räumlicher Auflösung yₖ ist,
- K die Anzahl der Bilder mit zweiter räumlicher Auflösung ist,
- m_{c}(·) eine binäre Maske ist, die jeden Pixelwert, der kleiner oder gleich einem Schwellenwert c ist, durch Null ersetzt,
- g_{ρ} der Konfidenzfaktor ist, der durch einen Parameter ρ des konvolutionellen neuronalen Netzwerks (25) parametrisiert wird,
- Wₖ ein Verzerrungsoperator ist, der durch den Verzerrungsparameter (pₖ) charakterisiert wird, der dem Bild mit zweiter räumlicher Auflösung zugeordnet ist, und
- yₖ₀ das Referenzbild mit zweiter räumlicher Auflösung ist.

7. Vorrichtung (5) nach einem der vorhergehenden Ansprüche, **dadurch gekennzeichnet, dass** die Ausrichtungseinheit (23) so ausgelegt ist, dass sie das Referenzbild mit zweiter räumlicher Auflösung (yₖ₀) in Abhängigkeit von jedem Verzerrungsparameter (pₖ) mittels bilinearer Interpolation ausrichtet.

8. Vorrichtung (5) nach einem der vorhergehenden Ansprüche, **dadurch gekennzeichnet, dass** die Verarbeitungseinheit (21) so ausgelegt ist, dass sie jedes Bild mit zweiter räumlicher Auflösung (yₖ) einem Demosaicing unterzieht, jedes dem Demosaicing unterzogene Bild mit zweiter räumlicher Auflösung mittels Interpolation entsprechend dem zugehörigen Verzerrungsparameter (pₖ) ausrichtet, durch Mittelwertbildung der dem Demosaicing unterzogenen und ausgerichteten Bilder mit zweiter räumlicher Auflösung ein Bild mit zweiter räumlicher Auflösung erzeugt und, sofern die zweite räumliche Auflösung geringer ist als die erste räumliche Auflösung, das erzeugte Bild mit zweiter räumlicher Auflösung skaliert, um das Anfangsbild mit erster räumlicher Auflösung (x₀) zu erhalten.

9. Vorrichtung (5) nach einem der vorhergehenden Ansprüche, **dadurch gekennzeichnet, dass** die Aktualisierungseinheit (29) so ausgelegt ist, dass sie die Hilfsvariable (z) mittels Gradientenabstieg wie folgt aktualisiert: $z ← z - δ \left(η\left(z-x\right)+{\sum }_{k = 1}^{K} {A}_{k}^{T} \left({w}_{k}^{2}⋅\left({A}_{k}z-{y}_{k}\right)\right)\right)$ mit: ${A}_{k} = Δ {t}_{k} {CD}_{s} {BW}_{k}$ wobei: - z die Hilfsvariable ist,
- x die Schätzvariable des Bildes mit erster räumlicher Auflösung ist,
- yₖ das k-te Bild mit zweiter räumlicher Auflösung ist,
- K die Anzahl der Bilder mit zweiter räumlicher Auflösung ist,
- wₖ das dem Bild mit zweiter räumlicher Auflösung yₖ zugeordnete Rauschunterdrückungsgewicht ist,
- Δtₖ die Expositionszeit für das Bild mit zweiter räumlicher Auflösung yₖ ist,
- wₖ ein Verzerrungsoperator ist, der durch den Verzerrungsparameter (pₖ) charakterisiert wird, der dem Bild mit zweiter räumlicher Auflösung zugeordnet ist,
- C eine binäre Maske ist, die eine Matrix aus Farbfiltern abbildet,
- s der Skalierungsfaktor ist, der verwendet wird, um das Anfangsbild mit erster räumlicher Auflösung (x₀) zu erhalten,
- Dₛ ein Dezimierungsoperator ist, der durch den Skalierungsfaktor s gekennzeichnet ist,
- B ein Unschärfeoperator ist,
- δ ein Parameter des Gradientenabstiegs ist, und
- η ein Parameter der quadratischen Energiefunktion mit zwei Variablen ist.

10. Vorrichtung (5) nach einem der vorhergehenden Ansprüche, **dadurch gekennzeichnet, dass** das Optimierungsmodul (13) so ausgelegt ist, dass es drei aufeinanderfolgende Iterationen durchführt.

11. Vorrichtung (5) nach einem der vorhergehenden Ansprüche, **dadurch gekennzeichnet, dass** mindestens ein konvolutionelles neuronales Netzwerk (15, 25, 31) eine U-Net-Architektur aufweist.

12. Verfahren zur Erzeugung eines Bildes mit einer ersten räumlichen Auflösung (*x̂*) aus einer Vielzahl von Paaren, die jeweils aus einem Bild mit einer zweiten räumlichen Auflösung (yₖ) gebildet werden, die kleiner oder gleich der ersten räumlichen Auflösung ist, und einer Expositionszeit (Δtₖ), wobei das Verfahren von der Vorrichtung (5) nach einem der vorhergehenden Ansprüche durchgeführt wird und Folgendes aufweist:
- eine Initialisierungsphase (210), die folgende Schritte aufweist:
Empfangen (300) der Bilder mit zweiter räumlicher Auflösung (yₖ),
Schätzen (310), für jedes Bild mit zweiter räumlicher Auflösung (yₖ), eines Verzerrungsparameters durch Anwendung eines Lucas-Kanade-Algorithmus,
Anwenden, zumindest auf ein Referenzbild mit zweiter räumlicher Auflösung (yₖ₀) unter den Bildern mit zweiter räumlicher Auflösung (yₖ), eines Demosaicing und, sofern die zweite räumliche Auflösung geringer ist als die erste räumliche Auflösung, einer Skalierung, um ein Anfangsbild mit erster räumlicher Auflösung (x₀) zu erhalten, und
- eine Optimierungsphase (220), die folgende Schritte aufweist:
Empfangen (400) der Bilder mit zweiter räumlicher Auflösung (yₖ), der zugehörigen Verzerrungsparameter (pₖ) und des Anfangsbildes mit erster räumlicher Auflösung (x₀),
Minimieren einer quadratischen Energiefunktion, die durch eine Schätzvariable des Bildes mit erster räumlicher Auflösung (x) und eine Hilfsvariable (z) parametrisiert ist, wobei die Schätzvariable für das Bild mit erster räumlicher Auflösung (x) und die Hilfsvariable (z) auf der Grundlage des Anfangsbildes mit erster räumlicher Auflösung (x₀) initialisiert werden, wobei die Minimierung durch aufeinanderfolgende Iterationen erfolgt, die jeweils die Aktualisierung (420) der Hilfsvariablen (z) mittels Gradientenabstieg in Abhängigkeit von den Bildern zweiter räumlicher Auflösung (yₖ) und den zugehörigen Verzerrungsparametern (pₖ) sowie die Aktualisierung (430) der Schätzvariablen für das Bild mit erster räumlicher Auflösung (x) in Abhängigkeit von der aktualisierten Hilfsvariablen (z) erfolgt, wobei das Verfahren **dadurch gekennzeichnet ist, dass** die Initialisierungsphase (210) die folgenden Schritte aufweist:
Empfangen (300) ferner der jeweiligen Expositionszeiten (Δtₖ) der Bilder mit zweiter räumlicher Auflösung (yₖ), Ausrichten (320) mittels Interpolation, für jedes Bild mit zweiter räumlicher Auflösung (yₖ), des Referenzbildes mit zweiter räumlicher Auflösung (yₖ₀) in Abhängigkeit von dem Verzerrungsparameter (pₖ), der dem Bild mit zweiter räumlicher Auflösung (Yₖ) zugeordnet ist,
Verwenden (330) eines konvolutionellen neuronalen Netzwerks (25), das als Eingabe jedes Bild mit zweiter räumlicher Auflösung (yₖ) und das ausgerichtete Referenzbild mit zweiter räumlicher Auflösung (Wₖyₖ₀) in Abhängigkeit vom zugehörigen Verzerrungsparameter (pₖ) empfängt und als Ausgabe einen Konfidenzfaktor (g_{ρ}) erzeugt,
Berechnen (340), für jedes Bild mit zweiter räumlicher Auflösung (yₖ), eines Rauschunterdrückungsgewichts (wₖ) in Abhängigkeit von der entsprechenden Expositionszeit (Δtₖ) und dem zugehörigen Konfidenzfaktor (g_{ρ}),
und dass die Optimierungsphase (220) die folgenden Schritte aufweist:
Empfangen (400) ferner der den Bildern mit zweiter räumlicher Auflösung (yₖ) jeweils zugeordneten Rauschunterdrückungsgewichte (wₖ),
Aktualisieren (420) der Hilfsvariablen (z) mittels Gradientenabstieg ferner in Abhängigkeit von den Rauschunterdrückungsgewichten (wₖ).

13. Verfahren nach Anspruch 12, **dadurch gekennzeichnet, dass** es darüber hinaus eine Vortrainingsphase (200) der Vorrichtung (5) mit einem Trainingsdatensatz aufweist, der ein Bild mit erster räumlicher Auflösung (x⁽¹⁾) und eine Vielzahl von Paaren enthält, die jeweils aus einem Bild mit zweiter räumlicher Auflösung (yₖ⁽¹⁾) und einer Expositionszeit (Δtₖ⁽¹⁾) bestehen, wobei jedes Bild mit zweiter räumlicher Auflösung (yₖ⁽¹⁾) wie folgt aus dem Bild mit erster räumlicher Auflösung (x⁽¹⁾) erzeugt wird: ${{y}_{k}}^{\left(1\right)} = {{A}_{k}}^{\left(1\right)} {x}^{\left(1\right)} + {{ε}_{k}}^{\left(1\right)}$ mit: ${{A}_{k}}^{\left(1\right)} = Δ {{t}_{k}}^{\left(1\right)} {C}^{\left(1\right)} {{D}_{s}}^{\left(1\right)} {B}^{\left(1\right)} {{W}_{k}}^{\left(1\right)}$ wobei: - x⁽¹⁾ das Bild mit erster räumlicher Auflösung des Trainingsdatensatzes ist,
- yₖ⁽¹⁾ das k-te Bild mit zweiter räumlicher Auflösung des Trainingsdatensatzes ist,
- Δtₖ⁽¹⁾ die Expositionszeit des Bildes mit zweiter räumlicher Auflösung yₖ⁽¹⁾ ist,
- Wₖ⁽¹⁾ ein dem Bild mit zweiter räumlicher Auflösung ₖ⁽¹⁾ zugeordneter Verzerrungsoperator ist,
- C⁽¹⁾ eine binäre Maske ist, die eine Matrix aus Farbfiltern abbildet,
- Dₛ⁽¹⁾ ein Dezimierungsoperator ist, der durch einen Skalierungsfaktor s gekennzeichnet ist,
- B⁽¹⁾ ein Unschärfeoperator ist,
- εₖ⁽¹⁾ ein dem Bild mit zweiter räumlicher Auflösung yₖ⁽¹⁾ zugeordnetes Rauschen ist.

14. Verfahren nach Anspruch 13, **dadurch gekennzeichnet, dass** die Vortrainingsphase (200) unter Verwendung mehrerer Trainingsdatensätze überwacht wird, die jeweils ein Bild mit erster räumlicher Auflösung (x⁽ⁱ⁾) und eine Vielzahl von Paaren aufweisen, die jeweils aus einem Bild mit zweiter räumlicher Auflösung (yₖ⁽ⁱ⁾) und einer Expositionszeit (Δtₖ⁽ⁱ⁾) bestehen, wobei die überwachte Vortrainingsphase (200) es ermöglicht, die Vorrichtung (5) so zu parametrisieren, dass die folgende Größe minimiert wird: ${\sum }_{i = 1}^{n} {\left‖{x}^{\left(i\right)}-{\hat{x}}^{\left(i\right)}\right‖}_{1}$ wobei: - *x⁽ⁱ⁾* das Bild mit erster räumlicher Auflösung des i-ten Trainingsdatensatzes ist,
- *x̂⁽ⁱ⁾* das Bild mit erster räumlicher Auflösung ist, das durch die Vorrichtung (5) ausgehend vom i-ten Trainingsdatensatz geschätzt wird, und
- n die Anzahl der Trainingsdatensätze ist.

15. Computerprogramm, das Anweisungen aufweist, deren Ausführung durch mindestens einen Prozessor (9) zur Durchführung des Verfahrens nach einem der Ansprüche 12 bis 14 führt.

## Claims

1. Device (5) for forming an image (*x̂* having a first spatial resolution from a plurality of pairs each formed by an image (yₖ) having a second spatial resolution lower than or equal to the first spatial resolution and an exposure time (Δtₖ), said device (5) comprising:
- an initialisation module (11) arranged to receive the images (yₖ) having the second spatial resolution and comprising:
• an estimator (17) arranged to estimate, for each image (yₖ) having the second spatial resolution, a distortion parameter by applying a Lucas-Kanade algorithm,
• a processing unit (21) arranged to apply, to at least one reference image (yₖ₀) having the second spatial resolution out of the images (yₖ) having the second spatial resolution, demosaicking and, when the second spatial resolution is lower than the first spatial resolution, scaling to obtain an initial image (x₀) having the first spatial resolution, and
- an optimisation module (13) arranged to receive the images (yₖ) having the second spatial resolution, associated distortion parameters (pₖ) and the initial image (x₀) having the first spatial resolution and to minimise a quadratic energy function parameterised by an estimation variable (x) of the image having the first spatial resolution and an auxiliary variable (z), said estimation variable of the image (x) having the first spatial resolution and said auxiliary variable (z) being initialised on the basis of the initial image (x₀) having the first spatial resolution, the minimisation being performed by successive iterations each comprising the updating of the auxiliary variable (z) by a gradient descent as a function of the images (yₖ) having the second spatial resolution and associated distortion parameters (pₖ) and the updating of the estimation variable (x) of the image having the first spatial resolution as a function of the updated auxiliary variable (z),
said device (5) being **characterised in that** the initialisation module (11) is arranged to further receive the respective exposure times (Δtₖ) of the images (yₖ) having the second spatial resolution and further comprises:
• an alignment unit (23) arranged to align by interpolation, for each image (yₖ) having the second spatial resolution, the reference image (yₖ₀) having the second spatial resolution as a function of the distortion parameter (pₖ) associated with said image (yₖ) having the second spatial resolution,
• a convolutional neural network (25) arranged to receive, as input, each image (yₖ) having the second spatial resolution and the aligned reference second spatial resolution image (Wₖyₖ₀) as a function of the associated distortion parameter (pₖ) and to generate, as output, a confidence factor (g_{ρ}),
• a computer (27) arranged to calculate, for each image (yₖ) having the second spatial resolution, an deghosting weight (wₖ) as a function of the corresponding exposure time (Δtₖ) and the associated confidence factor (g_{ρ}),
and **in that** the optimisation module (13) is arranged to also receive the deghosting weights (wₖ) associated respectively with the images (yₖ) having the second spatial resolution and comprises:
• an updating unit (29) arranged to update the auxiliary variable (z) by gradient descent as a further function of the deghosting weights (wₖ).

2. Device (5) according to claim 1, **characterised in that** the initialisation module (11) further comprises:
• a convolutional neural network (15) arranged to receive, as input, the images (yₖ) having the second spatial resolution and to generate, as output, a feature map (FMₖ) for each image (yₖ) having the second spatial resolution,
and **in that** the estimator (17) is arranged to apply the Lucas-Kanade algorithm to each feature map (FMₖ) to estimate the distortion parameter (pₖ) associated with each image (yₖ) having the second spatial resolution.

3. Device (5) according to claim 2, **characterised in that** the estimator (17) is arranged to process each feature map (FMₖ), for the application of the Lucas-Kanade algorithm, in the form of a Gaussian pyramid.

4. Device (5) according to any one of the preceding claims, **characterised in that** the optimisation module (13) further comprises:
• a convolutional neural network (31) arranged to receive, as input, the updated auxiliary variable (z) and to generate, as output, the estimation variable (x) of the updated image having the first spatial resolution .

5. Device (5) according to claim 4, **characterised in that** the convolutional neural network (31) of the optimisation module (13) is arranged to implement weight sharing from one iteration to the other.

6. Device (5) according to any one of the preceding claims, **characterised in that** the computer (27) is arranged to calculate each deghosting weight (wₖ) as follows: ${w}_{k} = \frac{Δ {t}_{k} {m}_{c} \left({y}_{k}\right)}{{\sum }_{j = 1}^{K} Δ {t}_{j} {m}_{c} \left({y}_{j}\right)} ⋅ {g}_{ρ} \left({y}_{k},{W}_{k}{y}_{k 0}\right)$ where: - yₖ is the k-th image having the second spatial resolution,
- wₖ is the deghosting weight calculated for the image yₖ having the second spatial resolution ,
- Δtₖ is the exposure time of the image yₖ having the second spatial resolution,
- K is the number of images having the second spatial resolution,
- m_{c}(·) is a binary mask replacing by zero any pixel value lower than or equal to a threshold c,
- g_{ρ} is the confidence factor parameterised by a parameter ρ of the convolutional neural network (25),
- Wₖ is a distortion operator **characterised by** the distortion parameter (pₖ) associated with the image yₖ having second spatial resolution, and
- yₖ₀ is the reference image having the second spatial resolution.

7. Device (5) according to any one of the preceding claims, **characterised in that** the alignment unit (23) is arranged to align the reference image (yₖ₀) having the second spatial resolution as a function of each distortion parameter (pₖ) by bilinear interpolation.

8. Device (5) according to any one of the preceding claims, **characterised in that** the processing unit (21) is arranged to demosaick each image (yₖ) having the second spatial resolution, to align by interpolation each demosaicked the image having the second spatial resolution as a function of the associated distortion parameter (pₖ), to form an image having the second spatial resolution by averaging demosaicked and aligned the images having the second spatial resolution and, when the second spatial resolution is lower than the first spatial resolution, to scale the formed second spatial resolution image to obtain the initial image (x₀) having the first spatial resolution.

9. Device (5) according to any one of the preceding claims, **characterised in that** the updating unit (29) is arranged to update the auxiliary variable (z) by gradient descent as follows: $z ← z - δ \left(η\left(z-x\right)+{\sum }_{k = 1}^{K} {A}_{k}^{T} \left({w}_{k}^{2}⋅\left({A}_{k}z-{y}_{k}\right)\right)\right)$ with: ${A}_{k} = Δ {t}_{k} {CD}_{s} {BW}_{k}$ where: - z is the auxiliary variable,
- x is the estimation variable of the image having the first spatial resolution,
- yₖ is the k-th image having the second spatial resolution,
- K is the number of images having the second spatial resolution,
- wₖ is the deghosting weight associated with the image yₖ having the second spatial resolution,
- Δtₖ is the exposure time of the image yₖ having the second spatial resolution,
- Wₖ is a distortion operator **characterised by** the distortion parameter (pₖ) associated with the image yₖ having the second spatial resolution,
- C is a binary mask modelling a matrix of coloured filters,
- s is the scaling factor used to obtain the initial image (x₀) gaving the first spatial resolution,
- Dₛ is a decimation operator **characterised by** the scaling factor s,
- B is a blurring operator,
- δ is a parameter of the gradient descent, and
- η is a parameter of the quadratic energy function with two variables.

10. Device (5) according to any one of the preceding claims, **characterised in that** the optimisation module (13) is arranged to implement three successive iterations.

11. Device (5) according to any one of the preceding claims, **characterised in that** at least one convolutional neural network (15, 25, 31) has a U-net type architecture.

12. Method for forming an image (*x̂* having a first spatial resolution from a plurality of pairs each formed by an image (yₖ) having a second spatial resolution lower than or equal to the first spatial resolution and an exposure time (Δtₖ), said method being implemented by the device (5) according to any one of the preceding claims and comprising:
- an initialisation phase (210) comprising the following operations:
receiving (300) the images (yₖ) having the second spatial resolution,
estimating (310), for each image (yₖ) having the second spatial resolution, a distortion parameter by applying a Lucas-Kanade algorithm,
applying, to at least one reference image (yₖ₀) having the second spatial resolution out of the images (yₖ) having the second spatial resolution, a demosaicking and, when the second spatial resolution is lower than the first spatial resolution, a scaling to obtain an initial image (x₀) having the first spatial resolution, and
- an optimisation phase (220) comprising the following operations:
receiving (400) the images (yₖ) having the second spatial resolution, the associated distortion parameters (pₖ) and the initial image (x₀) having the first spatial resolution, minimising a quadratic energy function parameterised by an estimation variable (x) of the image having the first spatial resolution and an auxiliary variable(z), said estimation variable (x) of the image having the first spatial resolution and said auxiliary variable(z) being initialised on the basis of the initial image (x₀) having the first spatial resolution, the minimisation being performed by successive iterations each comprising updating (420) the auxiliary variable(z) by a gradient descent as a function of the images (yₖ) having the second spatial resolution and associated distortion parameters (pₖ) and updating (430) the estimation variable (x) of the image having the first spatial resolution image as a function of the updated auxiliary variable(z),
said method being **characterised in that** the initialisation phase (210) comprises the following operations:
additionally receiving (300) the respective exposure times (Δtₖ) of the images (yₖ) having the second spatial resolution ,
aligning (320) by interpolation, for each image (yₖ) having the second spatial resolution, the reference image (yₖ₀) having the second spatial resolution as a function of the distortion parameter (pₖ) associated with said image (yₖ) having the second spatial resolution,
using (330) a convolutional neural network (25) receiving, as input, each image (yₖ) having the second spatial resolution and the aligned second spatial resolution image (Wₖyₖ₀) as a function of the associated distortion parameter (pₖ) and generating, as output, a confidence factor (g_{ρ}),
calculating (340), for each image (yₖ) having the second spatial resolution, an deghosting weight (wₖ) as a function of the corresponding exposure time (Δtₖ) and the associated confidence factor (g_{ρ}),
and **in that** the optimisation phase (220) comprises the following operations:
additionally receiving (400) the deghosting weights (wₖ) respectively associated with the images (yₖ) having the second spatial resolution,
updating (420) the auxiliary variable (z) by gradient descent as a further function of the deghosting weights (wₖ).

13. Method according to claim 12, **characterised in that** it further comprises a pre-training phase (200) of the device (5) with training data set comprising an image (x⁽¹⁾) having the first spatial resolution and a plurality of pairs each formed by an image (yₖ⁽¹⁾) having the second spatial resolutionand an exposure time (Δtₖ⁽¹⁾), each image (yₖ⁽¹⁾) having the second spatial resolution being generated from the image (x⁽¹⁾) having the first spatial resolution as follows: ${{y}_{k}}^{\left(1\right)} = {{A}_{k}}^{\left(1\right)} {x}^{\left(1\right)} + {{ε}_{k}}^{\left(1\right)}$ with: ${{A}_{k}}^{\left(1\right)} = Δ {{t}_{k}}^{\left(1\right)} {C}^{\left(1\right)} {{D}_{s}}^{\left(1\right)} {B}^{\left(1\right)} {{W}_{k}}^{\left(1\right)}$ where: - x⁽¹⁾ is the image having the first spatial resolution of the training data set,
- yₖ⁽¹⁾ is the k-th image having the second spatial resolution of the training data set,
- Δtₖ⁽¹⁾ is the exposure time of the image yₖ⁽¹⁾ having the second spatial resolution,
- Wₖ⁽¹⁾ is a distortion operator associated with the image yₖ⁽¹⁾ having the second spatial resolution,
- C⁽¹⁾ is a binary mask modelling a matrix of coloured filters,
- Dₛ⁽¹⁾ is a decimation operator **characterised by** a scaling factor s,
- B⁽¹⁾ is a blurring operator,
- εₖ⁽¹⁾ is a noise associated with the image yₖ⁽¹⁾ having the second spatial resolution.

14. Method according to claim 13, **characterised in that** the pre-training phase (200) is supervised using a plurality of training data sets each comprising an image (x⁽ⁱ⁾) having the first spatial resolution and a plurality of pairs each formed by an image (yₖ⁽ⁱ⁾) having the second spatial resolution and an exposure time (Δtₖ⁽ⁱ⁾), said supervised pre-training phase(200) making it possible to parameterise said device (5) so as to minimise the following quantity: ${\sum }_{i = 1}^{n} {\left‖{x}^{\left(i\right)}-{\hat{x}}^{\left(i\right)}\right‖}_{1}$ where: - *x*^{(*i*)} is the image having the first spatial resolution of the i-th training data set,
- *x̂*^{(*i*)} is the image having the first spatial resolution estimated by the device (5) from the i-th training data set, and
- n is the number of training data sets.

15. Computer program comprising instructions which when executed by at least one processor (9) results in the implementation of the method according to any one of claims 12 to 14.
